# EUROPÄISCHE PATENTSCHRIFT

(11) **EP 4 132 894 B1**
(45) Veröffentlichungstag und Bekanntmachung des Hinweises auf die Patenterteilung: **19.07.2023**
(21) Anmeldenummer: 21713902.1
(22) Anmeldetag: 17.03.2021
(51) Int. Cl.: C04B 28/02, C04B 28/18, C04B 41/00, C04B 41/45, C04B 41/52, C04B 41/71, B44C 1/10, C04B 111/62, C04B 111/00

(54) **VERFAHREN ZUR HERSTELLUNG EINES DEKORIERTEN, MINERALISCHEN VERBUNDKÖRPERS, DEKORIERTER, MINERALISCHER VERBUNDKÖRPER UND VERWENDUNG EINER MEHRSCHICHTFOLIE**
METHOD FOR PRODUCING A DECORATIVE MINERAL COMPOSITE BODY, DECORATED MINERAL COMPOSITE BODY AND USE OF A MULTI-LAYER FILM
PROCÉDÉ DE FABRICATION D'UN CORPS COMPOSITE MINÉRAL DÉCORATIF, CORPS COMPOSITE MINÉRAL DÉCORÉ ET UTILISATION D'UN FILM MULTICOUCHE

(30) Priorität: 08.04.2020 DE 102020109909
(43) Veröffentlichungstag der Anmeldung: 15.02.2023
(73) Patentinhaber: LEONHARD KURZ Stiftung & Co. KG, 90763 Fürth (DE)
(72) Erfinder: REUTHER, Uwe, 90441 Nürnberg (DE); LASCH, Roman, 90762 Fürth (DE)
(74) Vertreter: Louis Pöhlau Lohrentz
(86) Internationale Anmeldenummer: PCT/EP2021/056768
(87) Internationale Veröffentlichungsnummer: WO 2021/204503

(56) Entgegenhaltungen:
- EP-A1- 0 857 767
- EP-A1- 1 829 699
- EP-A2- 0 412 492
- EP-A2- 1 976 809
- WO-A1-03/055828
- WO-A2-2017/046308
- DE-A1- 2 715 070
- DE-A1- 19 611 297
- DE-A1-102015 223 197
- DE-A1-102017 104 658
- DE-B- 1 174 679
- US-B2- 7 238 391

## Beschreibung

Die vorliegende Erfindung betrifft ein Verfahren zur Herstellung eines dekorierten, mineralischen Verbundkörpers, einen dekorierten, mineralischen Verbundkörper und die Verwendung einer Mehrschichtfolie zur Herstellung eines dekorierten, mineralischen Verbundkörpers.

Mineralische Baustoffe, wie beispielsweise Beton, Mörtel oder Kalksandstein, werden beispielsweise bei der Herstellung von Gebäuden, bei der Errichtung von Tunneln, Brücken und Stützwände oder Gründungen oder von einzelnen Wänden, Decken, Stützen oder Ringankern, aber auch bei der Herstellung von Möbeln oder Kunstwerken verwendet.

Dabei können insbesondere die im Außenbereich auftretenden Witterungseinflüsse zu einer Beeinträchtigung der Dauerhaftigkeit von mineralischen Baustoffen führen.

Die Dauerhaftigkeit von Betonbauwerken hat beispielsweise in Deutschland über das Bauproduktengesetz und die Landesbauordnungen den Rang einer gesetzlichen Anforderung. Das bedeutet, dass Standsicherheit, Gebrauchstauglichkeit und Dauerhaftigkeit vorzugsweise gleichrangige Kriterien sind. Nach DIN EN 1992-1-1/A1 :2015-03 ("Eurocode 2: Bemessung und Konstruktion von Stahlbeton- und Spannbetontragwerken - Teil 1-1: Allgemeine Bemessungsregeln und Regeln für den Hochbau"; Deutsche Fassung EN 1992-1-1:2004/A1:2014, Ausgabedatum 2015-03) gelten Bauwerke als dauerhaft, wenn sie während der vorgesehenen Nutzungsdauer ihre Funktion hinsichtlich Tragfähigkeit und Gebrauchstauglichkeit ohne wesentlichen Verlust der Nutzungseigenschaften bei einem angemessenen Instandhaltungsaufwand erfüllen.

Die oberflächlich sichtbaren Zeichen von Beeinträchtigungen der Dauerhaftigkeit beispielsweise bei Betonwerkstoffen sind das Auftreten von Abplatzungen oder Abblätterungen, das Auftreten von Rissen und/oder die sichtbaren Änderungen der Struktur oder der Färbung der Oberfläche.

Daneben werden an mineralische Baustoffe, die beispielsweise nicht verputzt oder verblendet werden und dessen Ansichtsflächen beispielsweise gestalterische Funktionen erfüllen, hohe Ansprüche hinsichtlich der Oberflächenbeschaffenheit, Textur und/oder Widerstandsfähigkeit gestellt.

WO 03/055828 A1 beschreibt ein Verfahren zur Beschichtung eines zementhaltigen Formteils.

Es ist daher die Aufgabe der vorliegenden Erfindung, einen modifizierten mineralischen Baustoff bereitzustellen, der einen verbesserten Schutz gegen Korrosion, beispielsweise unter der Wirkung von Sauerstoff, Kohlenstoffdioxid und/oder Feuchtigkeit, aufweist und vorzugsweise einen Schutz vor Rissbildung aufweist.

Weiterhin soll das Verfahren eine kostengünstige Herstellung des modifizierten mineralischen Baustoffs ermöglichen und ggf. zur Veredelung von mineralischen Baustoffen im Innen- und Außenbau geeignet sein.

Die Aufgabe der vorliegenden Erfindung wird durch die Bereitstellung eines Verfahrens nach Anspruch 1 zur Herstellung eines dekorierten, mineralischen Verbundkörpers unter Verwendung wenigstens einer Mehrschichtfolie gelöst, wobei das Verfahren folgende Schritte umfasst:
a) Bereitstellen wenigstens eines Formelements, vorzugsweise Schalung, mit wenigstens einer Außenfläche und wenigstens einer Innenfläche,
b) Applizieren einer fließfähigen oder plastisch verformbaren, mineralischen Baustoff-Mischung, die Wasser und wenigstens ein mineralisches Bindemittel umfasst, auf die wenigstens eine Innenfläche des Formelements, vorzugsweise Schalung,
c) zumindest teilweises Erstarren der mineralischen Baustoff-Mischung unter Erhalt eines formstabilen, mineralischen Grünkörpers, und
d) zumindest teilweises Erhärten der mineralischen Baustoff-Mischung,

wobei die Mehrschichtfolie eine Trägerlage und eine auf der Trägerlage angeordnete Übertragungslage, die wenigstens ein Dekorelement enthält, aufweist,
wobei die Übertragungslage an der der Trägerlage abgewandten Seite wenigstens eine polymerhaltige Grundierungsschicht aufweist, die wenigstens ein Polymer, das wenigstens eine dissoziationsfähige, funktionelle Gruppe aufweist, umfasst, und
wobei I) die wenigstens eine Mehrschichtfolie vor Schritt b) mit der von der wenigstens einen polymerhaltigen Grundierungsschicht abgewandten Seite der Trägerlage auf der wenigstens einen Innenfläche des bereitgestellten Formelements, vorzugsweise Schalung, angeordnet wird und in Schritt b) die wenigstens eine polymerhaltige Grundierungsschicht zumindest teilweise mit der fließfähigen oder plastisch verformbaren, mineralischen Baustoff-Mischung in Kontakt gebracht wird, wobei in Schritt c) ein dekorierter, formstabiler, mineralischer Grünkörper erhalten wird,
   und/oder
wobei II) die wenigstens eine Mehrschichtfolie in und/oder nach Schritt c) mit der wenigstens einen polymerhaltigen Grundierungsschicht zumindest teilweise auf dem formstabilen, mineralischen Grünkörper angeordnet wird, wobei ein dekorierter, formstabiler, mineralischer Grünkörper erhalten wird, und
wobei bei Alternative I) und II) nach Schritt d) ein dekorierter, mineralischer Verbundkörper erhalten wird,
wobei die wenigstens eine polymerhaltige Grundierungsschicht wenigstens ein Polymer umfasst, das wenigstens eine dissoziationsfähige, funktionelle Gruppe aufweist, und wobei die wenigstens eine dissoziationsfähige, funktionelle Gruppe jeweils unabhängig voneinander eine Amino-Gruppe und/oder eine Hydroxy-Gruppe und/oder eine freie Säure-Gruppe, und/oder eine verkappte Säure-Gruppe, und/oder eine Kombination davon ist.

Bevorzugte Ausführungsformen des erfindungsgemäßen Verfahrens sind in den abhängigen Ansprüchen 2 bis 14 angegeben.

Die Aufgabe der vorliegenden Erfindung wird ebenfalls durch die Bereitstellung eines dekorierten, mineralischen Verbundkörpers nach Anspruch 15 gelöst, hergestellt nach einem Verfahren der Ansprüche 1 bis 14,
wobei der dekorierte, mineralische Verbundkörper ein mineralisches Substrat und wenigstens eine, an wenigstens einer Oberfläche des Substrates zumindest teilweise angeordnete Übertragungslage, die wenigstens ein Dekorelement enthält, umfasst,
wobei die dem Substrat zugewandte Seite der Übertragungslage durch wenigstens eine polymerhaltige Grundierungsschicht gebildet ist, die mit dem mineralischen Substrat zumindest formschlüssig verbunden ist und wenigstens ein Polymer, das wenigstens eine dissoziationsfähige, funktionelle Gruppe aufweist, umfasst.

Bevorzugte Ausführungsformen des erfindungsgemäßen dekorierten, mineralischen Verbundkörpers sind in den abhängigen Ansprüchen 16 bis 17 angegeben.

Die Aufgabe der vorliegenden Erfindung wird weiterhin durch die Bereitstellung einer Verwendung nach Anspruch 18 einer Mehrschichtfolie zur Herstellung eines dekorierten, mineralischen Verbundkörpers gelöst,
wobei die Mehrschichtfolie eine Trägerlage und eine auf der Trägerlage angeordnete Übertragungslage, die wenigstens ein Dekorelement enthält, aufweist,
wobei die Übertragungslage an der der Trägerlage abgewandten Seite wenigstens eine polymerhaltige Grundierungsschicht aufweist,
wobei die wenigstens eine polymerhaltige Grundierungsschicht wenigstens ein Polymer umfasst, das wenigstens eine dissoziationsfähige, funktionelle Gruppe aufweist,
und wobei die wenigstens eine dissoziationsfähige, funktionelle Gruppe jeweils unabhängig voneinander eine Amino-Gruppe und/oder eine Hydroxy-Gruppe und/oder eine freie Säure-Gruppe, und/oder eine verkappte Säure-Gruppe, und/oder eine Kombination davon ist.

Unter dem Begriff "dissoziationsfähige, funktionelle Gruppe" wird eine an das wenigstens eine Polymer kovalent gebundene funktionelle Gruppe verstanden, die bei Kontakt mit einem sauren wässrigen, neutralen wässrigen oder alkalischen wässrigen Medium derart reagiert, dass zumindest im Gleichgewicht anionische und/oder kationische Ladungen generiert werden können. Beispielsweise bedeutet dissoziationsfähige, funktionelle Gruppe, dass Teilstrukturen der dissoziationsfähigen, funktionellen Gruppe bei Kontakt mit einem sauren wässrigen, neutralen wässrigen oder alkalischen wässrigen Medium in mindestens zwei oder mehrere Moleküle und/oder positiv- und/oder negativ geladene lonen im Gleichgewicht reagieren können. Eine geeignete dissoziationsfähige, funktionelle Gruppe kann beispielsweise wenigstens ein Proton abgeben, wobei eine anionische, funktionelle Gruppe gebildet wird, oder ein Proton aufnehmen, wobei eine kationische, funktionelle Gruppe gebildet wird.

Eine erfindungsgemäß zu verwendende Mehrschichtfolie, die vorzugsweise als Transferfolie oder Laminierfolie ausgebildet sein kann, umfasst eine Trägerlage und eine auf der Trägerlage angeordnete Übertragungslage, die wenigstens ein Dekorelement enthält, wobei die Übertragungslage bei Ausgestaltung der Mehrschichtfolie als Transferfolie vorzugsweise lösbar auf der Trägerlage angeordnet ist. Bei Ausgestaltung der Mehrschichtfolie als Laminierfolie ist die Übertragungslage vorzugsweise fest und unlösbar auf der Trägerlage angeordnet.

Eine erfindungsgemäß zu verwendende Transferfolie wird vorzugsweise zur Übertragung einer Übertragungslage auf ein Objekt verwendet, wobei wenigstens eine Oberfläche des Objektes zumindest teilweise mit wenigstens einer, der Trägerlage abgewandten Oberfläche der Übertragungslage verbunden wird, unter Erhalt eines dekorierten Objektes.

Nach dem Anordnen der Übertragungslage auf zumindest Teilbereichen der wenigstens einen Oberfläche des Objekts wird bei Ausgestaltung der Mehrschichtfolie als Transferfolie vorzugsweise die Trägerlage von der Übertragungslage, vorzugsweise vollständig, entfernt, so dass lediglich die Übertragungslage auf zumindest Teilbereichen der Oberfläche des dekorierten Objektes angeordnet ist, vorzugsweise zumindest teilweise die Oberfläche des dekorierten Objektes bildet. Vorzugsweise bildet die auf zumindest Teilbereichen der Oberfläche des dekorierten Objektes angeordnete Übertragungslage eine, weiter bevorzugt geschlossene, Beschichtung.

Dabei erfolgt das Ablösen der Trägerlage von der Übertragungslage vorzugsweise an einer Schichtgrenze zwischen der Trägerlage und der Übertragungslage.

An dieser Schichtgrenze kann insbesondere eine Ablöseschicht angeordnet sein, die das Ablösen der Übertragungslage von der Trägerlage erleichtert. Die Ablöseschicht kann dabei Teil der Übertragungslage und/oder Teil der Trägerfolie sein und nach dem Ablösen auf der Übertragungslage und/oder auf der Trägerfolie angeordnet sein.

Bei Ausgestaltung der Mehrschichtfolie als Laminierfolie verbleibt die Trägerfolie vorzugsweise nach dem Anordnen der Übertragungslage auf zumindest Teilbereichen der wenigstens einen Oberfläche des Objekts mit der Übertragungslage verbunden, so dass die Trägerfolie auf zumindest Teilbereichen der Oberfläche des dekorierten Objektes angeordnet ist, vorzugsweise zumindest teilweise die Oberfläche des dekorierten Objektes bildet. Vorzugsweise bildet die auf zumindest Teilbereichen der Oberfläche des dekorierten Objektes angeordnete Übertragungslage und die Trägerfolie eine, weiter bevorzugt geschlossene, Beschichtung.

Die als Laminierfolie ausgebildete Mehrschichtfolie kann beispielsweise nach dem Anordnen der Mehrschichtfolie auf zumindest Teilbereichen der wenigstens einen Oberfläche des dekorierten Objekts ein Verbinden von zwei oder mehreren erfindungsgemäß dekorierten Objekten ermöglichen, beispielsweise mit Hilfe des Fügen durch Umformen und/oder des Fügen unter Einfluss von Wärme und/oder Druck, wobei vorzugsweise zwei oder mehr benachbarte Mehrschichtfolien verbunden werden können, beispielsweise durch, Schweißen, Kleben, Heißprägen, Laminieren oder Kombinationen davon.

Zusammen mit der Übertragungslage wird wenigstens ein Dekorelement auf das Objekt übertragen, wobei das wenigstens eine Dekorelement nach dem Übertragen der Übertragungslage auf zumindest Teilbereichen der Oberfläche des dekorierten Objektes angeordnet ist und, je nach Ausgestaltung des wenigstens einen Dekorelements, die physikalischen Eigenschaften, vorzugsweise die haptischen und/oder die optischen und/oder die elektrischen und/oder die mechanischen Eigenschaften, und/oder die chemischen Eigenschaften der Oberfläche des dekorierten Objektes beeinflussen kann.

Beispielsweise kann das wenigstens eine Dekorelement die Oberflächentextur und/oder Farbe des dekorierten Objektes, beispielsweise durch Bereitstellung von Prägungen und/oder Aufrauungen und/oder Mustern und/oder einer Glätte und/oder durch Bereitstellung von reflexionsbestimmenden Eigenschaften wie Transparenz und/oder Glanz und/oder Mattierung und/oder durch Bereitstellung einer Farbe, beeinflussen.

Beispielsweise kann das wenigstens eine Dekorelement die mechanischen Eigenschaften des dekorierten Objektes, beispielsweise durch Bereitstellung einer Oberflächenhärte, Oberflächenelastizität und/oder Bruchfestigkeit der Oberfläche, beeinflussen. Beispielsweise kann das wenigstens eine Dekorelement die Aufnahmefähigkeit und/oder Durchlässigkeit des dekorierten Objektes für Wasser und/oder Wasserdampf, beispielsweise durch Bereitstellung einer Wasser- und/oder Wasserdampf-abweisenden Beschichtung, beeinflussen.

Beispielsweise kann das wenigstens eine Dekorelement die chemischen Eigenschaften des dekorierten Objektes, beispielsweise durch Bereitstellung einer Beständigkeit der Oberfläche gegenüber dem Eindringen von Stoffen und/oder der Einwirkung von Säuren und/oder Basen, beeinflussen. Beispielsweise kann das wenigstens eine Dekorelement die Beständigkeit des dekorierten Objektes gegen Frost-Tau-Wechselbeanspruchung, beispielsweise in Gegenwart von Tausalz, verbessern.

Das wenigstens eine Dekorelement kann vorzugsweise als Motiv, als Dekor, beispielsweise Einzelbilddekor oder Endlosdekor, als Muster, oder einer Kombination davon ausgebildet sein.

Das wenigstens eine Dekorelement kann vorzugsweise zumindest bereichsweise opak und/oder transluzent und/oder transparent sein.

Beispielsweise kann das wenigstens eine Dekorelement als optisch aktive bzw. optische Effekte erzeugende Oberflächenstruktur ausgebildet sein, wobei vorzugsweise eine geeignete Oberflächenstruktur aus der Gruppe, die aus diffraktiver Oberflächenstruktur, insbesondere Hologramm, Beugungsstruktur Nullter Ordnung, Mattstruktur, insbesondere isotrope oder anisotrope Mattstruktur, Blaze-Gitter, Linsenstruktur, Mikrolinsenstruktur, Mikroprismenstruktur, Mikrospiegelstruktur, oder einer Kombination zwei oder mehrerer dieser Oberflächenstrukturen besteht, ausgewählt wird.

Beispielsweise kann das wenigstens eine Dekorelement als optisch aktiver und/oder optisch variabler Stoff ausgebildet sein, der vorzugsweise als Farbstoff, Flüssigkristallmaterial, Pigment, oder einer Mischung davon vorliegen. Geeignete Pigmente sind beispielsweise Interferenzschichtpigmente, Flüssigkristallpigmente, diffraktive Pigmente, metallische Pigmente, thermochrome Pigmente, photochrome Pigmente oder Mischungen davon. Der Stoff kann insbesondere in unterschiedlichen Wellenlängenbereichen, beispielsweise im Infrarot-Bereich und/oder im Ultraviolett-Bereich und/oder im sichtbaren Bereich jeweils unterschiedliche oder auch gleichartige optische Effekte zeigen. Der Stoff kann insbesondere auch unter unterschiedlichen Beleuchtungs- und/oder Betrachtungswinkeln oder -richtungen jeweils unterschiedliche oder auch gleichartige optische Effekte zeigen.

Das Dekorelement weist vorzugsweise wenigstens eine Dekorschicht auf. Das Dekorelement weist vorzugsweise mehrere Dekorschichten auf.

Vorzugsweise umfasst oder besteht die wenigstens eine Dekorschicht unabhängig voneinander aus zumindest partiell angeordneten, vorzugsweise vollflächigen, Schutzschichten, zumindest partiell angeordneten Barriereschichten, zumindest partiell angeordneten Reflexionsschichten, zumindest partiell angeordneten leitfähigen Schichten, zumindest partiell angeordneten Haftvermittlerschichten, zumindest partiell angeordneten Kleberschichten, zumindest partiell angeordneten Metallschichten, zumindest partiell angeordneten Schichten mit Reliefstrukturen, zumindest partiell angeordneten Farbschichten, zumindest partiell angeordneten Interferenzschichten oder Kombinationen davon.

Die wenigstens eine Dekorschicht kann vorzugsweise zumindest bereichsweise opak und/oder transluzent und/oder transparent sein. Die Dekorschichten können unabhängig voneinander jeweils unterschiedliche Transparenzgrade aufweisen.

Weiter bevorzugt wird die wenigstens eine Dekorschicht aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opaken Reflexionsschichten, transparenten Reflexionsschichten, metallischen Reflexionsschichten oder dielektrischen Reflexionsschichten, optisch variablen Schichten, optisch aktiven Schichten, Interferenz-Mehrschichtsystemen, Volumenhologrammschichten, Flüssigkristallschichten, insbesondere cholesterischen Flüssigkristallschichten, elektrisch leitfähigen Schichten, Antennenschichten, Elektrodenschichten, magnetischen Schichten, Magnetspeicherschichten, Barriereschichten und Kombinationen davon besteht, ausgewählt.

Ein mineralischer Baustoff ist ein anorganischer nichtmetallischer Baustoff aus vorzugsweise kristallinen Bestandteilen. Es kann sich dabei um natürliche Minerale handeln, wie Naturwerkstein, Sand oder Lehm, oder um ein geformtes Stoffgemisch aus gesiebten oder gemahlenen Mineralen, das durch Kristallisation von vorzugsweise mineralischen Bindemitteln oder mineralischen Bindemittel-Bestandteilen die gewünschte Festigkeit erhält.

Insbesondere haben die Erfinder festgestellt, dass durch Veredelung eines mineralischen Baustoffes mit wenigstens einer erfindungsgemäß zu verwendenden Mehrschichtfolie das Auftreten von Korrosion, beispielsweise Betonkorrosion, verhindert werden kann.

Durch das Aufbringen einer Folienbeschichtung erhält der dekorierte, mineralische Baustoff in Form des erfindungsgemäßen Verbundkörpers vorzugsweise eine Barriere gegen Sauerstoff und/oder Kohlenstoffdioxid und/oder Feuchtigkeit.

Weiterhin wird durch das erfindungsgemäße Verfahren vorzugsweise ein Schutz vor Carbonatisierung bereitgestellt.

Als Carbonatisierung wird vorzugsweise eine chemische Reaktion bezeichnet, die in Beton bei Anwesenheit von Kohlendioxid und Feuchtigkeit abläuft.

Dieser Vorgang schadet dem Beton nicht direkt. Durch die Bildung von Kalkstein während der Carbonatisierung wird vorzugsweise die Festigkeit sogar erhöht. Im Falle von Stahlbeton kann allerdings der durch den Vorgang hervorgerufene Verlust des alkalischen Milieus (Depassivierung) der Bewehrung Korrosion ermöglichen, die schwerwiegende Schäden am Bauteil nach sich ziehen kann.

Der mit dem erfindungsgemäßen Verfahren hergestellte dekorierte, mineralische Verbundkörper weist eine Barriere gegen saure Substanzen sowie einen Schutz vor treibenden und lösenden Angriffen auf.

Beton besteht beispielsweise im Wesentlichen aus durch Zement verkittetem Naturgestein. Zementstein ist als basisches Produkt vorzugsweise wenig widerstandsfähig gegen Säuren. Kalk-Tonerde-Verbindungen des Zementsteins können beispielsweise durch Säuren in wasserlösliche Verbindungen umgewandelt werden, die durch Wasser und/oder atmosphärische Einwirkungen abgetragen werden können. Hierdurch wird der Zusammenhalt zwischen Gesteinskörnung und Zementstein vorzugsweise zunächst gelockert und bei fortschreitendem Angriff zerstört. Solange die Betonoberfläche intakt ist, kann ein Angriff nur von der Oberfläche her beginnen. Je größer die Angriffsfläche bei fortschreitender Öffnung und Zerklüftung der Betonaußenhaut wird, desto schneller kann die Zerstörung fortschreiten.

Auf lange Sicht kann Beton auch durch Regenwasser und andere sehr weiche Wässer mit einer Härte von etwa weniger als 3°dH (deutscher Härte) ausgelaugt werden. Über den Beton laufendes kalk- und magnesiumarmes Wasser kann Kalziumhydroxid lösen und ausschwemmen. Sodann kann eine hydrolytische Zersetzung der Hydratphasen erfolgen.

Ein treibender Angriff liegt vor, wenn die auf den Beton einwirkenden Stoffe bei Reaktion mit dem Zementstein, in einigen Fällen auch mit den Zuschlägen, neue Reaktionsprodukte mit wesentlich größerem Volumen bilden. Der größere Raumbedarf kann dann zur Sprengung des Betons von innen herausführen.

Ein typisches Beispiel hierfür ist das Sulfattreiben. Wirken Sulfat-haltige Gase oder Lösungen auf Beton ein, kann es durch Reaktion zwischen Sulfaten und dem Tricalciumaluminat des Zementsteins (C3A) vorzugsweise zur Bildung von Ettringit kommen. Dabei kann sich das Volumen der Reaktionsprodukte auf das Achtfache des ursprünglichen Volumens der Ausgangsstoffe vergrößern und der Beton wird von innen herausgesprengt. Dieser Schaden tritt häufig bei Abwasserkanälen aus Beton auf. Hier bildet sich unter den vor allen bei tiefliegenden Kanalsystemen herrschenden Bedingungen (geringe Fließgeschwindigkeit, relativ hohe Temperatur und fehlende Belüftung) durch bakterielle Zersetzung der im Abwasser enthaltenen schwefelhaltigen organischen Stoffe (wie Eiweiße) das nach faulen Eiern riechende Schwefelwasserstoffgas. Dieses Gas kann durch andere Bakterien oder durch Luftsauerstoff zu Sulfaten oxidiert werden und diese können das Sulfattreiben verursachen.

Der vorzugsweise mit dem erfindungsgemäßen Verfahren hergestellte dekorierte, mineralische Verbundkörper weist vorzugsweise weiterhin eine Barriere gegen Frosttaumittel, beispielsweise Chlorid-Ionen-haltige Tausalze auf.

Gelangen Chlorid-Ionen beispielsweise an die Bewehrung, so besteht die Gefahr der Lochfraßkorrosion, insbesondere für den empfindlichen Spannstahl. Besonders gefährdet sind beispielsweise Brückenbauwerke und Parkdecks. Die Schadensvorgänge spielen sich nicht an der Oberfläche ab, wo sie leicht zu erkennen sind, sondern im Inneren des Bauteils an der Bewehrung durch punktuelle Zerstörung. Sie können deshalb zu dem Zeitpunkt an dem sie erkannt werden, bereits zur schweren Beeinträchtigung der Standsicherheit geführt haben.

Das erfindungsgemäße Verfahren nach Anspruch 1 zur Herstellung eines dekorierten, mineralischen Verbundkörpers unter Verwendung wenigstens einer Mehrschichtfolie umfasst folgende Schritte:
a) Bereitstellen wenigstens eines Formelements, vorzugsweise Schalung, mit wenigstens einer Außenfläche und wenigstens einer Innenfläche,
b) Applizieren einer fließfähigen oder plastisch verformbaren, mineralischen Baustoff-Mischung, die Wasser und wenigstens ein mineralisches Bindemittel umfasst, auf die wenigstens eine Innenfläche des Formelements, vorzugsweise Schalung,
c) zumindest teilweises Erstarren der mineralischen Baustoff-Mischung unter Erhalt eines formstabilen, mineralischen Grünkörpers, und
d) zumindest teilweises Erhärten der mineralischen Baustoff-Mischung.

Die bei dem erfindungsgemäßen Verfahren verwendete wenigstens eine Mehrschichtfolie weist eine Trägerlage und eine auf der Trägerlage angeordnete Übertragungslage, die wenigstens ein Dekorelement enthält, auf, wobei die Übertragungslage an der der Trägerlage abgewandten Seite wenigstens eine polymerhaltige Grundierungsschicht, die wenigstens ein, wenigstens eine dissoziationsfähige Gruppe aufweisendes Polymer umfasst, aufweist,
wobei I) die wenigstens eine Mehrschichtfolie vor Schritt b) mit der von der wenigstens einen polymerhaltigen Grundierungsschicht abgewandten Seite der Trägerlage auf der wenigstens einen Innenfläche des bereitgestellten Formelements, vorzugsweise Schalung, angeordnet wird und in Schritt b) die wenigstens eine polymerhaltige Grundierungsschicht zumindest teilweise mit der fließfähigen oder plastisch verformbaren, mineralischen Baustoff-Mischung in Kontakt gebracht wird, wobei in Schritt c) ein dekorierter, formstabiler, mineralischer Grünkörper erhalten wird,
   und/oder
wobei II) die wenigstens eine Mehrschichtfolie in und/oder nach Schritt c) mit der wenigstens einen polymerhaltigen Grundierungsschicht zumindest teilweise auf dem formstabilen, mineralischen Grünkörper angeordnet wird, wobei ein dekorierter, formstabiler, mineralischer Grünkörper erhalten wird, und
wobei bei Alternative I) und II) nach Schritt d) ein dekorierter, mineralischer Verbundkörper erhalten wird.

Bei dem erfindungsgemäßen Verfahren wird die wenigstens eine Mehrschichtfolie vorzugsweise:
I) vor Schritt b) mit der von der wenigstens einen polymerhaltigen Grundierungsschicht abgewandten Seite der Trägerlage auf der wenigstens einen Innenfläche des bereitgestellten Formelements, vorzugsweise Schalung, angeordnet, wobei in Schritt b) die wenigstens eine polymerhaltige Grundierungsschicht der Mehrschichtfolie zumindest teilweise mit der fließfähigen oder plastisch verformbaren, mineralischen Baustoff-Mischung in Kontakt gebracht wird, wobei in Schritt c) ein dekorierter, formstabiler, mineralischer Grünkörper erhalten wird,
   oder
II) in und/oder nach Schritt c) mit der von der Trägerlage abgewandten Seite der wenigstens einen polymerhaltigen Grundierungsschicht auf dem formstabilen, mineralischen Grünkörper angeordnet, wobei durch das wenigstens teilweise Erstarren der mineralischen Baustoff-Mischung ein dekorierter, formstabiler, mineralischer Grünkörper erhalten wird.

Vorzugsweise kann bei dem erfindungsgemäßen Verfahren wenigstens eine erste Mehrschichtfolie und wenigstens eine zweite Mehrschichtfolie verwendet werden, wobei die wenigstens erste Mehrschichtfolie vor Schritt b) mit der von der wenigstens einen polymerhaltigen Grundierungsschicht abgewandten Seite der Trägerlage der wenigstens ersten Mehrschichtfolie auf der wenigstens einen Innenfläche des bereitgestellten Formelements, vorzugsweise Schalung, angeordnet wird, wobei in Schritt b) die wenigstens eine polymerhaltige Grundierungsschicht der wenigstens ersten Mehrschichtfolie zumindest teilweise mit der fließfähigen oder plastisch verformbaren, mineralischen Baustoff-Mischung in Kontakt gebracht wird, und wobei die wenigstens zweite Mehrschichtfolie in und/oder nach Schritt c) mit einer von der Trägerlage abgewandten Seite der wenigstens einen polymerhaltigen Grundierungsschicht der wenigstens zweiten Mehrschichtfolie auf dem formstabilen, mineralischen Grünkörper angeordnet wird, wobei durch das wenigstens teilweise Erstarren der mineralischen Baustoff-Mischung ein dekorierter, formstabiler, mineralischer Grünkörper erhalten wird.

Weiter bevorzugt wird bei Alternative II) des erfindungsgemäßen Verfahrens die wenigstens eine Mehrschichtfolie vor Schritt d) mit der von der Trägerlage abgewandten Seite der wenigstens einen polymerhaltigen Grundierungsschicht auf dem formstabilen, mineralischen Grünkörper angeordnet.

Durch das erfindungsgemäße Verfahren wird, vorzugsweise in oder nach Schritt d), ein dekorierter, mineralischer Verbundkörper erhalten, der ein zumindest teilweise erhärtetes mineralisches Substrat und wenigstens eine, an wenigstens einer Oberfläche des mineralischen Substrates zumindest teilweise angeordnete Übertragungslage, die wenigstens ein Dekorelement enthält, umfasst oder daraus besteht, wobei die dem mineralischen Substrat zugewandte Seite der Übertragungslage durch wenigstens eine polymerhaltige organische Grundierungsschicht gebildet ist, die mit dem mineralischen Substrat zumindest formschlüssig verbunden ist.

Vorzugsweise umfasst oder besteht das mineralische Substrat des dekorierten, mineralischen Verbundkörpers aus wenigstens einem erstarrten, vorzugsweise ausgehärteten, mineralischen Baustoff, optional wenigstens einem Zuschlagstoff und/oder wenigstens einem nicht-flüchtigen Additiv sowie optional wenigstens einem Bewehrungselement.

Ein mineralischer Baustoff ist vorzugsweise ein anorganischer nichtmetallischer Werkstoff aus zumindest teilweise kristallinen Bestandteilen. Es kann sich dabei um natürliche Minerale handeln, wie Naturwerkstein, Sand, Ton oder Lehm, oder um ein geformtes Stoffgemisch aus gesiebten und/oder gemahlenen Mineralien, die vorzugsweise in Gegenwart von Wasser durch Kristallisation wenigstens eines mineralischen Bindemittels die gewünschte Festigkeit erhält.

In Schritt b) des erfindungsgemäßen Verfahrens wird eine fließfähige oder plastisch verformbare, mineralische Baustoff-Mischung, die Wasser und wenigstens ein mineralisches Bindemittel umfasst, verwendet, die in Schritt c) des erfindungsgemäßen Verfahrens zumindest teilweise unter Erhalt eines formstabilen, mineralischen Grünkörpers erstarrt.

Das zumindest teilweise Erstarren der mineralischen Baustoff-Mischung kann auch als Abbinden bezeichnet werden, wobei das Erstarren insbesondere bei Zementleim die definierte Viskositätszunahme durch Wasserbindung, vorzugsweise Einlagerung von Kristallwasser, in Beton oder Mörtel darstellt.

Durch das zumindest teilweise Erstarren der mineralischen Baustoff-Mischung wird vorzugsweise ein mineralischer Grünkörper erhalten, der zumindest formstabil ist. Der Grünkörper weist vorzugsweise im Vergleich zum zumindest teilweise ausgehärteten mineralischen Verbundkörper eine geringere Festigkeit auf.

Die Festigkeit von mineralischen Baustoffen, beispielsweise Beton, entsteht durch die, vorzugsweise exotherme, Reaktion der Auskristallisierung von Bestandteilen des verwendeten mineralischen Bindemittels, beispielsweise Klinkerbestandteile des Zements, vorzugsweise unter Wasseraufnahme. Bei diesem Vorgang wachsen vorzugsweise Kristallnadeln, die sich fest ineinander verzahnen können.

Das Kristallwachstum kann bei einem mineralischen Baustoff über einen längeren Zeitraum anhalten, sodass die endgültige Festigkeit eines mineralischen Verbundkörpers vorzugsweise erst nach einer gewissen Zeitspanne erreicht wird.

Vorzugsweise erstarrt beispielsweise Zementleim über eine Dauer von zwölf Stunden. Anschließend erfolgt vorzugsweise die Phase des Erhärtens, wobei vorzugsweise eine Umwandlung von Zementleim zu Zementstein in Beton oder Mörtel erfolgt. Bei normalen Temperatur- und Feuchtigkeitsbedingungen erreicht Zement vorzugsweise nach 28 Tagen die Normfestigkeit.

Das im erfindungsgemäßen Verfahren verwendete wenigstens eine mineralische Bindemittel wird vorzugsweise aus der Gruppe ausgewählt, die aus Calciumsilikathydraten, Zement, Kalk, Ton, Gips, Lehm, Magnesiabinder und Kombinationen davon besteht

Vorzugsweise umfasst das wenigstens eine mineralische Bindemittel ein hydraulisches Bindemittel, ein nicht-hydraulisches Bindemittel oder eine Mischung davon oder besteht daraus.

Ein nicht-hydraulisches Bindemittel ist vorzugsweise ein anorganischer, nicht metallischer, fein gemahlener Stoff, der nach in Kontakt bringen, vorzugsweise dem Anmachen, mit Wasser an der Luft erhärtet. Nichthydraulische Bindemittel sind im erhärteten Zustand nicht wasserbeständig.

Ein nicht-hydraulisches Bindemittel ist vorzugsweise Luftkalk, der in Gegenwart von Wasser unter gleichzeitiger Luftzufuhr erhärtet, da das Kohlendioxid aus der Luft mit Wasser Kohlensäure bildet, welche zur Carbonatisierung des Calciumhydroxids (gelöschter Kalk) verwendet wird.

Ein weiteres nicht-hydraulisches Bindemittel ist vorzugsweise Gips (CaSO₄ × 2 H₂O), das in Form von Halbhydrat (CaSO₄ × 1/2 H₂O) oder Anhydrit (CaSO₄) als Bindemittel verwendet werden kann. Bei der Erhärtung nimmt das Bindemittel Wasser auf. Im Zuge dieser Hydratation entstehen nadelförmige Gips-Kristalle der Formel CaSO₄ × 2 H₂O, die sich gegenseitig verfilzen und verwachsen.

Ein weiteres nicht-hydraulisches Bindemittel ist vorzugsweise Magnesiabinder, das durch Mischen von kaustisch (ätzend) gebranntem Magnesit (Magnesia, MgO) mit in Wasser gelöstem Magnesiumchlorid (MgCl₂) hergestellt werden kann. Die Erhärtung erfolgt durch die sich gegenseitig durchdringenden und verfilzenden feinen Kristallnadeln des entstehenden Magnesiumhydroxids. Die Erhärtung ist in wenigen Stunden abgeschlossen.

Ein hydraulisches Bindemittel ist vorzugsweise ein anorganischer, nicht metallischer, fein gemahlener Stoff, der nach in Kontakt bringen, vorzugsweise dem Anmachen, mit Wasser infolge chemischer Reaktionen mit dem Wasser selbständig erstarrt und erhärtet und nach dem Erhärten vorzugsweise auch unter Wasser fest und raumbeständig bleibt.

Hydraulische Bindemittel bestehen aus Verbindungen zwischen einer unhydraulischen Base, beispielsweise Kalk (CaO), Magnesia (MgO) oder Mischungen davon, und sogenannten Hydraulefaktoren, beispielsweis Siliciumdioxid (SiO₂), Aluminiumoxid/Tonerde (Al₂O₃), Eisenoxid (Fe₂O₃) oder Mischungen davon.

Zu den hydraulischen Bindemitteln gehören beispielsweise alle Zementarten nach DIN EN 197-1:2011-11 ("Zement - Teil 1: Zusammensetzung, Anforderungen und Konformitätskriterien von Normalzement"; Deutsche Fassung EN 197-1:2011, Ausgabedatum 2011-11), DIN 1164-10:2013-03 ("Zement mit besonderen Eigenschaften - Teil 10: Zusammensetzung, Anforderungen und Übereinstimmungsnachweis von Zement mit niedrigem wirksamen Alkaligehalt", Ausgabedatum 2013-03) und DIN 1164-11:2003-11 (" Zement mit besonderen Eigenschaften - Teil 11: Zusammensetzung, Anforderungen und Übereinstimmungsnachweis von Zement mit verkürztem Erstarren", Ausgabedatum 2003-11) sowie hydraulischer Kalk nach DIN EN 459-1:2015-07 ("Baukalk - Teil 1: Begriffe, Anforderungen und Konformitätskriterien" Deutsche Fassung EN 459-1:2015, Ausgabedatum 2015-07).

Weiter bevorzugt wird das wenigstens eine mineralische Bindemittel aus der Gruppe ausgewählt, die aus Portlandzement, Portlandhüttenzement, Portlandsilikastaubzement, Portlandpuzzolanzement, Portlandflugaschezement, Portlandschieferzement, Portlandkalksteinzement, Portlandkompositzement, Hochofenzement, Puzzolanzement, Kompositzement, Tonerdezement und Mischungen davon besteht.

Maßgebend für die hydraulische Wirksamkeit eines Bindemittels sind vorzugsweise die molaren Anteile an reaktivem Calciumoxid (CaO), Siliciumdioxid (SiO₂) und/oder Aluminiumoxid (Al₂O₃), die in Gegenwart von Wasser erhärtungsfähige Calciumsilicathydrate (CSH) bzw. Calciumaluminathydrate bilden können.

Vorzugsweise weist ein hydraulisches Bindemittel Calciumoxid (CaO) und Siliciumdioxid (SiO₂) in einem CaO/SiO₂-Molverhältnis von größer als 1,5 auf.

Ein latent-hydraulischer Stoff weist Calciumoxid (CaO) und Siliciumdioxid (SiO₂) in einem CaO/SiO₂-Molverhältnis aus einem Bereich von 0,5 bis 1,5 auf.

Latent-hydraulische Stoffe können daher erst bei Zugabe eines Anregers, z. B. Calciumhydroxid (Ca(OH)₂) oder in ähnlicher Weise wirkende Stoffe, hydraulisch erhärten.

Latent-hydraulische Stoffe erhärten nach Feinmahlen und in Kontakt bringen, vorzugsweise Anmachen, mit Wasser selbstständig hydraulisch, da bei ihrer Reaktion mit Wasser ohne andere Zusätze durch Hydratation festigkeitsbildende, kalkhaltige Hydratationsprodukte entstehen.

Diese Reaktion verläuft allerdings sehr langsam und wird daher vorzugsweise für die technische Nutzung durch einen Anreger beschleunigt. Der für die Betontechnik wichtigste latent-hydraulische Stoff ist vorzugsweise Hüttensand.

Da latent hydraulische Stoffe keine selbständigen Bindemittel sind, zählen sie bei Verwendung als Ausgangsstoff von Beton zu den Betonzusatzstoffen.

Puzzolane sind kieselsäurehaltige oder kieselsäure- und tonerdehaltige Stoffe.

Puzzolane enthalten im Gegensatz zu latent hydraulischen Stoffen nur wenig Calciumoxid (CaO) auf. Puzzolane weisen Calciumoxid (CaO) und Siliciumdioxid (SiO₂) in einem CaO/SiO₂-Molverhältnis von kleiner als 0,5 auf.

Puzzolane können deshalb erhärtungsfähige Hydratationsprodukte nur im Zusammenwirken mit einem Stoff bilden, der nach dem in Kontakt bringen, vorzugsweise Anmachen, mit Wasser Calciumhydroxid (Ca(OH)₂) abgibt.

Als natürliche Puzzolane werden Gesteine und Erden bezeichnet, die vorzugsweise bei Temperaturen von höchstens etwa 150 °C getrocknet werden. Sie sind wie Trass, Lava, Puzzolanerde und Santorinerde meist vulkanischen Ursprungs.

Als künstliche bzw. natürliche getemperte Puzzolane werden Gesteine und Erden bezeichnet, die bei höherer Temperatur technisch calciniert (getempert) werden, um eine ausreichende puzzolanische Reaktionsfähigkeit zu entwickeln. Getemperter Ton, Ziegelmehl, Silikastaub und Flugasche können puzzolanische Eigenschaften aufweisen.

Wichtige Puzzolane sind Flugasche, Ziegelmehl, Silikastaub, Reisschalenasche, Phonolith, Calcinierter Ton, und Metakaolin.

Betontechnologisch gehören Puzzolane ebenfalls zu den Betonzusatzstoffen.

Vorzugsweise umfasst die mineralische Baustoff-Mischung Beton, Mörtel, Kalksandstein, Keramik oder eine Kombination davon oder besteht daraus. Vorzugsweise wird unter dem Begriff "Keramik" Silikat-Keramik, Oxidkeramik, Nicht-Oxid-Keramik und Kombinationen davon, vorzugsweise Silikat-Keramik und Oxidkeramik, verstanden.

Bei einer bevorzugten Ausführungsform des erfindungsgemäßen Verfahrens umfasst die mineralische Baustoff-Mischung Beton oder Mörtel, wobei das wenigstens eine mineralische Bindemittel Zement umfasst oder daraus besteht, und wobei die mineralische Baustoff-Mischung weiterhin Gesteinskörnung umfasst.

Unter dem Begriff "Gesteinskörnung" wird vorzugsweise ein Gemenge gebrochener oder ungebrochener, gleich oder verschieden großer Körner aus natürlichen und/oder künstlichen mineralischen Stoffen verstanden.

Eigenschaften und Beschaffenheit von geeigneten Gesteinskörnungen für Beton und Mörtel werden beispielsweise durch folgende Normen spezifiziert:
DIN EN 12620:2008-07 ("Gesteinskörnungen für Beton"; Ausgabedatum 2008-07),
DIN EN 13139:2002-08 ("Gesteinskörnungen für Mörtel"; Ausgabedatum 2002-08).

Vorzugsweise wird die wenigstens eine Mehrschichtfolie vor Schritt b) mit der von der wenigstens einen polymerhaltigen Grundierungsschicht abgewandten Seite der Trägerlage auf wenigstens eine Schalungsinnenfläche angeordnet, sodass vorzugsweise die wenigstes eine polymerhaltige Grundierungsschicht der Mehrschichtfolie von der wenigstens einen Schalungsinnenfläche weg weist.

In Schritt b) wird die wenigstens eine polymerhaltige Grundierungsschicht der Trägerlage zumindest teilweise mit der fließfähigen, mineralischen Baustoff-Mischung in Kontakt gebracht, wobei in Schritt c) durch das zumindest teilweise Erstarren der mineralischen Baustoff-Mischung ein dekorierter, formstabiler, mineralischer Grünkörper erhalten wird, bei dem die wenigstens eine polymerhaltige Grundierungsschicht der Mehrschichtfolie vorzugsweise formschlüssig mit der zumindest teilweise erstarrten mineralischen Baustoff-Mischung verbunden ist.

Vorzugsweise nach Entfernen der Schalung wird durch zumindest teilweises Erhärten der mineralischen Baustoff-Mischung ein dekorierter, mineralischer Verbundkörper erhalten.

Beton ist vorzugsweise ein Baustoff, der als Dispersion unter Zugabe von Flüssigkeit, vorzugsweise Wasser, aus einem Bindemittel und Zuschlagstoffen angemischt wird.

Der ausgehärtete Beton wird in manchen Zusammenhängen auch als Kunststein bezeichnet.

Beton enthält vorzugsweise Zement als Bindemittel und Gesteinskörnung als Zuschlagstoff. Das Zugabewasser leitet vorzugsweise den chemischen Abbindevorgang ein. Um die Verarbeitbarkeit und weitere Eigenschaften des Betons zu beeinflussen, können der Baustoff-Mischung Betonzusatzstoffe und/oder Betonzusatzmittel hinzugefügt werden. Das Wasser wird vorzugsweise zum größten Teil chemisch gebunden.

Vorzugsweise weist die Beton- oder Mörtel-umfassende mineralische Baustoff-Mischung weiterhin Additive, Betonzusatzmittel, Betonzusatzstoffe und Mischungen davon auf.

Beton wird vorzugsweise als Verbundwerkstoff in Kombination mit wenigstens einem Bewehrungselement, beispielsweise einer zugfesten Bewehrung, eingesetzt. Ein geeignetes Bewehrungselement ist beispielsweise Betonstahl oder Spannstahl, beispielsweise in Form einer Matte, Stab, Draht, Ring, Gitterträger, oder Kombination davon, wobei vorzugsweise Stahlbeton bzw. Spannbeton erhalten wird. Geeignete Bewehrungselemente können ebenfalls aus Stahl-, Kunststoff- und/oder Glasfasern sowie Gewirken aus alkaliresistentem AR-Glas (AR = alkaliresistent) und/oder Kohlenstofffasern aufgebaut sein.

Geeignete Bewehrungselemente sind dem Fachmann bekannt.

Geeignete Betonarten sind beispielsweise: Aufbeton, Ortbeton, Pumpbeton, Schleuderbeton, Spritzbeton, Stampfbeton, Walzbeton, Unterwasserbeton, Vakuumbeton, Estrichbeton, Blauer Beton, Faser- und Textilbeton, Glasschaumbeton, Glasstahlbeton, Hochfester und ultrahochfester Beton (UHFB), Infraleichtbeton und Ultraleichtbeton, Konkretbeton, Luftporenbeton (LP-Beton)/Schaumbeton, Magerbeton, Ökobeton, Papierbeton, Polymerbeton und Mineralguss, Recyclingbeton, Säurebeständiger Beton, selbstreinigender Beton, selbstverdichtender Beton (SVB), Sicht-, Struktur-, Textur- und Fotobeton, Splitt- und Dränbeton, Stahlbeton, Spannbeton, Stahlfaserbeton, Transluzenter Beton (Lichtbeton), Waschbeton, Wasserundurchlässiger Beton (WU-Beton), Frischbeton, Farbiger Beton, Gefügedichter Beton, Haufwerkssporiger Leichtbeton, Schwerbeton/Strahlenschutzbeton, Holzbeton, Carbonbeton, Architekturbeton, Porenbeton, Faserbeton, Betonglas, Asphaltbeton, Mineralbeton, Schwefelbeton, Kunstharzbeton, Einkornbeton, oder Kombinationen davon.

Mörtel ist vorzugsweise ein Baustoff, der aus einem Bindemittel, beispielsweise Kalk oder Zement, Gesteinskörnung mit vorzugsweise höchstens 4 mm Korngröße sowie Zugabewasser besteht, gegebenenfalls noch aus Betonzusatzstoffen und - zusatzmitteln, und der durch chemische Reaktion der Bindemittel erhärtet.

Geeignete Mörtel sind beispielsweise Mauermörtel, Putzmörtel, Brandschutzmörtel, Kunstharzmörtel, Estrichmörtel, Vergussmörtel, Quellmörtel, Wassermörtel sowie mineralische Dichtschlämme oder Kombinationen davon.

Innerhalb der mineralischen Baustoffe können weiterhin vorgeformte Baustoffe, beispielsweise Stein oder Ziegel, von den nicht vorgeformten Baustoffen, beispielsweise Beton oder Mörtel, unterschieden werden.

Bei vorgeformten Baustoffen werden dampfgehärtete Baustoffe, wie beispielsweise Kalksandstein, Porenbeton, Faserzement, CSH-Dämmmaterial eingesetzt, die als wesentliche Komponente Calciumsilikathydrat (CSH) Phasen aufweisen.

Beispielsweise ist Porenbeton ein dampfgehärteter Baustoff vorzugsweise mit einer Rohdichte von 300 kg/m³ bis 800 kg/m³, der vorzugsweise aus den Rohstoffen Branntkalk (CaO) als mineralisches Bindemittel, Wasser und Quarzsand hergestellt werden kann, wobei eine geringe Menge eines Porenbildners, vorzugsweise Aluminiumpulver oder -paste, zugegeben wird. Die Baustoff-Mischung wird vorzugsweise in ein Formelement gegossen, in denen das metallische, feinteilige Aluminium in der alkalischen Suspension Wasserstoffgas entwickelt.

Bei der industriellen Fertigung von Kalksandsteinen wird vorzugsweise Branntkalk (CaO) und Sand (überwiegend Quarzsand) unter Zugabe von Wasser gemischt.

Wenn der Branntkalk mit Wasser vorzugsweise zu Calciumsilikathydrat umgewandelt ist, kann das Gemisch jeweils vorzugsweise mittels Pressen zu einem formstabilen Grünkörper geformt werden.

Bei einer bevorzugten Ausführungsform des erfindungsgemäßen Verfahrens umfasst die mineralische Baustoff-Mischung Kalksandstein oder Porenbeton oder besteht daraus, wobei das wenigstens eine mineralische Bindemittel ein Calciumsilikathydrat umfasst oder daraus besteht,
wobei in Schritt c) mittels Pressen ein formstabiler, mineralischer Grünkörper erhalten wird,
wobei die wenigstens eine Mehrschichtfolie in und/oder nach Schritt c) mit der wenigstens einen polymerhaltigen Grundierungsschicht auf wenigstens einer Oberfläche des formstabilen, mineralischen Grünkörpers zumindest teilweise angeordnet wird, wobei ein dekorierter, formstabiler, mineralischer Grünkörper erhalten wird, und
wobei in Schritt der dekorierte, formstabile, mineralische Grünkörper hydrothermal gehärtet wird, vorzugsweise bei einer Temperatur aus einem Bereich von 150°C bis 250°C in Gegenwart von Wasserdampf; vorzugsweise mit einem Druck von wenigstens 5 bar, und für einen Zeitraum von wenigstens 3 h, unter Erhalt eines dekorierten, mineralischen Verbundkörpers.

Bei einer bevorzugten Ausführungsform des erfindungsgemäßen Verfahrens umfasst die mineralische Baustoff-Mischung eine Keramik, vorzugsweise Silikat-Keramik, vorzugsweise Porzellan, Oxidkeramik und Nicht-Oxid-Keramik, vorzugsweise Silikat-Keramik und Oxidkeramik, oder besteht daraus, wobei das wenigstens eine mineralische Bindemittel ein Tonmineral, vorzugsweise Kaolinit, umfasst oder daraus besteht.

Vorzugsweise wird in Schritt c) mittels Pressen, Schlickerguss, Spritzguss, Foliengießen, Modellieren und/oder Extrudieren ein formstabiler, mineralischer Grünkörper erhalten, wobei die wenigstens eine Mehrschichtfolie in und/oder nach Schritt c) mit der wenigstens einen polymerhaltigen Grundierungsschicht auf wenigstens einer Oberfläche des formstabilen, mineralischen Grünkörpers zumindest teilweise angeordnet wird unter Erhalt eines dekorierten, formstabilen, mineralischen Grünkörpers.

Vorzugsweise wird in Schritt d) der dekorierte, formstabile, mineralische Grünkörper gebrannt, vorzugsweise bei einer Temperatur von 850°C oder mehr für einen Zeitraum von wenigstens 12 h, unter Erhalt eines dekorierten, mineralischen Verbundkörpers.

Weiter bevorzugt umfasst die wenigstens eine Mehrschichtfolie wenigstens ein feuerfestes Dekorelement, vorzugsweise ein oder mehrere feuerfeste Pigmente und/oder ein oder mehrere abgeformte Oberflächenreliefs.

Eine erfindungsgemäß zu verwendende Mehrschichtfolie weist eine Trägerlage und eine auf der Trägerlage angeordnete Übertragungslage, die wenigstens eines der vorgenannten Dekorelement enthält, auf, wobei die Übertragungslage an der der Trägerlage abgewandten Seite wenigstens eine polymerhaltige Grundierungsschicht aufweist.

Vorzugsweise wird im erfindungsgemäßen Verfahren die wenigstens eine polymerhaltige Grundierungsschicht der erfindungsgemäß zu verwendende Mehrschichtfolie:
I) in Schritt b) zumindest teilweise mit der fließfähigen oder plastisch verformbaren, mineralischen Baustoff-Mischung, die Wasser und wenigstens ein mineralisches Bindemittel umfasst, in Kontakt gebracht wird, wobei in Schritt c) ein dekorierter, formstabiler, mineralischer Grünkörper erhalten wird,
   und/oder
II) in und/oder nach Schritt c) zumindest teilweise auf wenigstens einer Oberfläche des, durch zumindest teilweises Erstarren der mineralischen Baustoff-Mischung erhaltenen formstabilen, mineralischen Grünkörpers angeordnet.

Die Erfinder haben festgestellt, dass durch zumindest teilweises Erstarren der mineralischen Baustoff-Mischung ein formstabiler, mineralischer Grünkörper gebildet wird, der Poren aufweist, in die sich die in der polymerhaltigen Grundierungsschicht enthaltene wenigstens ein Polymer umfassend wenigstens eine dissoziationsfähige, funktionelle Gruppe, vorzugsweise nach Dissoziation wenigstens einer dissoziationsfähigen, funktionellen Gruppe, mechanisch "verzahnen" können.

Je weiter die Erstarrung der Baustoff-Mischung fortschreitet, d.h. das Wachstum der nadelförmigen Calciumsilikathydrat-Kristalle vorzugsweise zunimmt, steigt die Haftfestigkeit der Grundierungsschicht auf der erstarrten Baustoff-Mischung an. Die Haftfestigkeit korreliert vorzugsweise mit der Aushärtedauer, da nach einem oder zwei Tagen die Haftfestigkeit geringer ist, als nach mehreren Tagen.

Die Haftfestigkeit der Mehrschichtfolie und/oder der Übertragungslage der Mehrschichtfolie auf der erstarrten Baustoff-Mischung oder dem erfindungsgemäßen Verbundkörper kann mit einem Gitterschnitt nach DIN EN ISO 2409: 2013-06 (Beschichtungsstoffe - Gitterschnittprüfung (ISO 2409:2013), Deutsche Fassung der EN ISO 2409:2013, Ausgabedatum: 2013-06) bestimmt werden.

Insbesondere haben die Erfinder festgestellt, dass ein in der wenigstens einen polymerhaltigen Grundierungsschicht enthaltenes Polymermolekül, das wenigstens eine dissoziationsfähige, funktionelle Gruppe aufweist, nach Dissoziation wenigstens einer dissoziationsfähigen, funktionellen Gruppe, vorzugsweise unter Bildung von wenigstens einer anionischen, funktionellen Gruppe, weiter bevorzugt anionischen Säure-Gruppe, besonders gut auf der fließfähigen oder plastisch verformbaren, mineralischen Baustoff-Mischung oder dem, durch zumindest teilweises Erstarren der mineralischen Baustoff-Mischung erhaltenen formstabilen, mineralischen Grünkörper haftet.

In diesem Zusammenhang wird vorzugsweise angenommen, dass das wenigstens eine, wenigstens eine dissoziationsfähige, funktionelle Gruppe aufweisende Polymer nach Dissoziation wenigstens einer der dissoziationsfähigen, funktionellen Gruppen auf molekularer Ebene vorzugsweise wenigstens eine anionische, funktionelle Gruppe, beispielsweise eine deprotonierte Säuregruppe, aufweist, wobei die wenigstens eine anionische, funktionelle Gruppe des Polymers mit Metallionen, insbesondere Ca²⁺-Ionen, der mineralischen Baustoff-Mischung, vorzugsweise in Gegenwart von gebundenem Wasser, koordinative Bindungen eingehen können.

Weiter bevorzugt weist die wässrige Polymer-Dispersion oder Polymer-Lösung, die zur Herstellung der polymerhaltigen Grundierungsschicht verwendet wird, einen pH-Wert von 1,0 bis 9,0, vorzugsweise von 1,5 bis 7,0, vorzugsweise von 2,0 bis 6,0, vorzugsweise von 2,5 bis 5,5, vorzugsweise von 3,0 bis 5,0, jeweils gemessen bei einer Temperatur von 25°C und einem Druck von 1013 mbar, auf.

Alternativ kann zur Herstellung der polymerhaltigen Grundierungsschicht eine nichtwässrige Polymer-Dispersion oder Polymer-Lösung verwendet werden, die neben dem wenigstens einen, wenigstens eine dissoziationsfähige, funktionelle Gruppe aufweisenden Polymer vorzugsweise weiterhin wenigstens ein organisches Lösungsmittel, das beispielsweise aus Alkoholen, Carbonsäureestern, Ethern, Ketonen, Alkanen, aromatische Kohlenwasserstoffen, halogenierten aliphatischen Kohlenwasserstoffen, Lactonen, Lactamen, Nitrilen, Nitroverbindungen, tertiäre Carbonsäureamiden, Sulfoxiden, Glykolethern oder Mischungen davon ausgewählt ist, umfasst.

Die wenigstens eine polymerhaltige Grundierungsschicht umfasst wenigstens ein Polymer, das wenigstens eine dissoziationsfähige, funktionelle Gruppe, die weiter jeweils unabhängig voneinander eine Amino-Gruppe und/oder eine Hydroxy-Gruppe und/oder eine freie Säure-Gruppe und/oder eine verkappte Säure-Gruppe und/oder eine Kombination davon, vorzugsweise eine freie Säure-Gruppe und/oder eine verkappte Säure-Gruppe und/oder eine Kombination davon, ist, aufweist.

Weiter bevorzugt umfasst das wenigstens eine, wenigstens eine dissoziationsfähige, funktionelle Gruppe aufweisende Polymer der wenigstens einen polymerhaltigen Grundierungsschicht jeweils unabhängig voneinander wenigstens eine freie Amino-Gruppe und/oder wenigstens eine freie Hydroxy-Gruppe und/oder wenigstens eine freie Säure-Gruppe, die vorzugsweise aus der Gruppe ausgewählt wird, die aus Carboxy-Gruppe, Sulfonsäure-Gruppe, die auch als Sulfo-Gruppe bezeichnet werden kann, Schwefelsäure-Monoester-Gruppe, Phosphonsäure-Gruppe, Phosphorsäure-Monoester-Gruppe und Kombinationen davon, vorzugsweise Carboxy-Gruppe, Sulfonsäure-Gruppe, Phosphonsäure-Gruppe und Kombinationen davon, weiter bevorzugt Carboxy-Gruppe, Sulfonsäure-Gruppe und Kombinationen davon, weiter bevorzugt Carboxy-Gruppe, besteht, und/oder wenigstens eine verkappte Säure-Gruppe, die vorzugsweise aus der Gruppe ausgewählt wird, die aus Carbonsäureester-Gruppe, Carbonsäureanhydrid-Gruppe, Carbonsäurehalogenid-Gruppe, Sulfonsäureester-Gruppe, Sulfonsäureanhydrid-Gruppe, Sulfonsäurehalogenid-Gruppe, Phosphonsäureester-Gruppe und Kombinationen davon, weiter bevorzugt Carbonsäureester-Gruppe, Carbonsäureanhydrid-Gruppe, Sulfonsäureester-Gruppe und Kombinationen davon, weiter bevorzugt Carbonsäureester-Gruppe, Sulfonsäureester-Gruppe und Kombinationen davon, weiter bevorzugt Carbonsäureester-Gruppe, besteht.

Weiter bevorzugt umfasst das wenigstens eine, wenigstens eine dissoziationsfähige, funktionelle Gruppe aufweisende Polymer der wenigstens einen polymerhaltigen Grundierungsschicht jeweils unabhängig voneinander wenigstens eine freie Säure-Gruppe, die vorzugsweise jeweils unabhängig voneinander aus der Gruppe ausgewählt wird, die aus Carboxy-Gruppe, Sulfonsäure-Gruppe, die auch als Sulfo-Gruppe bezeichnet werden kann, Schwefelsäure-Monoester-Gruppe, Phosphonsäure-Gruppe, Phosphorsäure-Monoester-Gruppe und Kombinationen davon, vorzugsweise Carboxy-Gruppe, Sulfonsäure-Gruppe, Phosphonsäure-Gruppe und Kombinationen davon, weiter bevorzugt Carboxy-Gruppe, Sulfonsäure-Gruppe und Kombinationen davon, weiter bevorzugt Carboxy-Gruppe, besteht, und/oder wenigstens eine verkappte Säure-Gruppe, die vorzugsweise jeweils unabhängig voneinander aus der Gruppe ausgewählt wird, die aus Carbonsäureester-Gruppe, Carbonsäureanhydrid-Gruppe, Carbonsäurehalogenid-Gruppe, Sulfonsäureester-Gruppe, Sulfonsäureanhydrid-Gruppe, Sulfonsäurehalogenid-Gruppe, Phosphonsäureester-Gruppe und Kombinationen davon, weiter bevorzugt Carbonsäureester-Gruppe, Carbonsäureanhydrid-Gruppe, Sulfonsäureester-Gruppe und Kombinationen davon, weiter bevorzugt Carbonsäureester-Gruppe, Carbonsäureanhydrid-Gruppe und Kombinationen davon, weiter bevorzugt Carbonsäureester-Gruppe, Sulfonsäureester-Gruppe und Kombinationen davon, weiter bevorzugt Carbonsäureester-Gruppe, besteht.

Ein Polymer, das wenigstens eine freie, anionische, funktionelle Gruppe aufweist, kann beispielsweise aus der Gruppe, die aus anionisch funktionalisierten Epoxyd-Polymeren und -Copolymeren, anionisch funktionalisierten Acryl-Polymeren und - Copolymeren, anionisch funktionalisierten Methacryl-Polymeren und -Copolymeren, anionisch funktionalisierten Polyurethan-Polymeren und -Copolymeren und Mischungen davon, vorzugsweise anionisch funktionalisierten Acryl-Polymeren, anionisch funktionalisierten Methacryl-Polymeren, anionisch funktionalisierten Polyurethan-Polymeren, Copolymeren davon und Mischungen davon, besteht, ausgewählt werden.

Anionisch funktionalisierte Polymere und Copolymere lassen sich beispielsweise über geeignete Kettenverlängerer, die entsprechende ionische Gruppen aufweisen, in das wenigstens eine Polymer einbauen, um dieses als in Wasser dispergiertes Teilchen zu stabilisieren.

Ein typischer Vertreter bei Polyurethan-Polymeren ist beispielsweise Dimethylolpropionsäure für Carboxy-Funktionalität und Diolsulfonate für seitenständige Sulfonsäuregruppen. Das erhaltene Polymer ist vorzugsweise permanent hydrophil und lässt sich weiter bevorzugt leicht dispergieren.

Ebenso können beispielsweise anionisch funktionalisierte Epoxidharze von einem Epoxidharz oder mehreren Epoxidharzen abgeleitet werden.

Anionische funktionalisierte Gruppen können in Epoxidharzmoleküle durch unterschiedliche Methoden eingeführt werden. Typischerweise enthalten Epoxidharze Hydroxygruppen sowie Epoxidgruppen. Diese Gruppen können mit verschiedenen Reagenzien, die die gewünschte anionische funktionelle Gruppe oder einen Vorläufer davon enthalten, umgesetzt werden, beispielsweise durch Variation des Verhältnisses von Dicarbonsäure zum Ausgangsepoxidharz.

Ein anderes Mittel, um anionische funktionelle Gruppen dem Epoxidharz zuzufügen besteht darin, dass das Epoxidharz mit einem funktionalisierenden Mittel umgesetzt wird, das wenigstens eine anionische funktionelle Gruppe oder einen Vorläufer davon und wenigstens eine funktionelle Gruppe enthält, die fähig ist, mit Epoxidgruppen und/oder Hydroxylgruppen zu reagieren, wobei das umzusetzende Epoxidharz vorzugsweise Hydroxylgruppen enthält.

Nicht ausschließliche Beispiele solcher funktionalisierender Mittel umfassen Verbindungen, die wenigstens eine Sulfonatfunktionalität und/oder wenigstens eine Carboxylatfunktionalität sowie weiter bevorzugt wenigstens eine aromatische Hydroxyl-Funktionalität besitzen.

Die alkalischen Metallsalze der Hydroxybenzolsulfonsäure und Hydroxybenzoesäure sind repräsentative Verbindungen dieses Typs.

Alternativ kann das Ausgangsepoxidharz durch Reaktion mit phosphorylierenden, sulfatierenden und/oder sulfonatierenden Reagenzien wie die Superphosphorsäure, Schwefelsäure und Ähnlichem abgeleitet werden

Vorzugsweise weisen Polyacrylate und Polymethacrylate freie deprotonierte Carboxylat-Gruppen auf.

Geeignete Polymer-Dispersion sind beispielsweise unter der Typenbezeichnung NeoCryl^{®}, wobei es sich um wässrige Polyacrylat-Polymer- und Copolymer-Dispersionen handelt, sowie NeoRez^{®}, wobei es sich um wässrige Polyurethan-Polymer- und Copolymer-Dispersionen handelt, kommerziell von DSM Coating Resins B.V. (Zwolle, NL) erhältlich.

Unter dem Begriff "freie Säure-Gruppe" wird vorzugsweise eine kovalent gebundene funktionelle Gruppe verstanden, die vorzugsweise wenigstens ein Proton abgeben kann. Vorzugsweise ist eine freie Säure-Gruppe ungeladen und wird weiter bevorzugt jeweils unabhängig voneinander aus der Gruppe, die aus Carboxy-Gruppe, Sulfonsäure-Gruppe, Schwefelsäure-Monoester-Gruppe, Phosphonsäure-Gruppe, Phosphorsäure-Monoester-Gruppe und Kombinationen davon, vorzugsweise Carboxy-Gruppe, Sulfonsäure-Gruppe, Phosphonsäure-Gruppe und Kombinationen davon, weiter bevorzugt Carboxy-Gruppe, Sulfonsäure-Gruppe und Kombinationen davon, weiter bevorzugt Carboxy-Gruppe, besteht, ausgewählt.

Das wenigstens eine Polymer, das wenigstens eine freie Säure-Gruppe aufweist, wird weiter bevorzugt aus der Gruppe, die aus Epoxyd-Polymeren und -Copolymeren jeweils mit wenigstens einer freien Säure-Gruppe, Acryl-Polymeren und - Copolymeren mit jeweils wenigstens einer freien Säure-Gruppe, Methacryl-Polymeren und -Copolymeren mit jeweils wenigstens einer freien Säure-Gruppe, Polyurethan-Polymeren und -Copolymeren mit jeweils wenigstens einer freien Säure-Gruppe und Mischungen davon, vorzugsweise Acryl-Polymeren mit jeweils wenigstens einer freien Säure-Gruppe, Methacryl-Polymeren mit jeweils wenigstens einer freien Säure-Gruppe, Polyurethan-Polymeren mit jeweils wenigstens einer freien Säure-Gruppe, Copolymeren davon und Mischungen davon, besteht, ausgewählt.

Geeignete Polymere mit wenigstens einer freien Säure-Gruppe können beispielsweise aus den vorgenannten Polymeren mit wenigstens einer freien, anionischen, funktionellen Gruppe hergestellt werden, vorzugsweise durch Änderung des pH-Wertes, beispielsweise durch Ansäuern.

Geeignete Polymere und Polymer-Dispersionen mit wenigstens einer freien Säure-Gruppe sind beispielsweise unter der Typenbezeichnung WÜKOSEAL^{®}, vorzugsweise WÜKOSEAL^{®} VP Ku, wobei es sich um ein Vinylacetat-EthylenCopolymer handelt, kommerziell von der MÜNZING CHEMIE GmbH (Abstatt, DE) erhältlich oder beispielsweise unter der Typenbezeichnung Carbopol^{®}, wobei es sich um Polyacrylsäuren handelt, kommerziell von der Lubrizol Coporation (Wickliffe, Ohio, US) erhältlich.

Das wenigstens eine Polymer, das wenigstens eine verkappte Säure-Gruppe aufweist, wird weiter bevorzugt aus der Gruppe, die aus Epoxyd-Polymeren und - Copolymeren mit jeweils wenigstens einer verkappten Säure-Gruppe, Acryl-Polymeren und -Copolymeren mit jeweils wenigstens einer verkappten Säure-Gruppe, Methacryl-Polymeren und -Copolymeren mit jeweils wenigstens einer verkappten Säure-Gruppe, Polyurethan-Polymeren und -Copolymeren mit jeweils wenigstens einer verkappten Säure-Gruppe und Mischungen davon, Styrol-Polymere und -Copolymeren mit jeweils wenigstens einer verkappten Säure-Gruppe, vorzugsweise Acryl-Polymeren und -Copolymeren mit jeweils wenigstens einer verkappten Säure-Gruppe, Methacryl-Polymeren und -Copolymeren mit jeweils wenigstens einer verkappten Säure-Gruppe, Polyurethan-Polymeren und - Copolymeren mit jeweils wenigstens einer verkappten Säure-Gruppe, Styrol-Polymere und -Copolymeren mit jeweils wenigstens einer verkappten Säure-Gruppe, und Mischungen davon, besteht, ausgewählt.

Unter dem Begriff "verkappte Säure-Gruppe" wird vorzugsweise eine funktionelle Gruppe verstanden, die weiter bevorzugt zumindest bei und/oder nach in Kontaktbringen des entsprechenden Polymers der Grundierungsschicht mit der fließfähigen oder plastisch verformbaren, mineralischen Baustoff-Mischung zumindest eine Säure-Gruppe, vorzugsweise in Form des deprotonierten Anions der entsprechenden Säure-Gruppe, freisetzt.

Geeignete Polymere mit wenigstens einer verkappten Säure-Gruppe, die vorzugsweise jeweils unabhängig voneinander aus der Gruppe ausgewählt wird, die aus Carbonsäureester-Gruppe, Carbonsäureanhydrid-Gruppe, Carbonsäurehalogenid-Gruppe, Sulfonsäureester-Gruppe, Sulfonsäureanhydrid-Gruppe, Sulfonsäurehalogenid-Gruppe, Phosphonsäureester-Gruppe und Kombinationen davon, weiter bevorzugt Carbonsäureester-Gruppe, Carbonsäureanhydrid-Gruppe, Sulfonsäureester-Gruppe und Kombinationen davon, weiter bevorzugt Carbonsäureester-Gruppe, Carbonsäureanhydrid-Gruppe und Kombinationen davon, weiter bevorzugt Carbonsäureester-Gruppe, Sulfonsäureester-Gruppe und Kombinationen davon, weiter bevorzugt Carbonsäureester-Gruppe, besteht, sind dem Fachmann bekannt und können beispielsweise nach im Stand der Technik bekannte Syntheseverfahren hergestellt werden.

Beispielsweise können Polymere mit wenigstens einer Ester-Gruppe, vorzugsweise Carbonsäureester-Gruppe, Sulfonsäureester-Gruppe, Phosphonsäureester-Gruppe, Kombinationen davon oder Mischungen davon, durch Umsetzten eines Polymers mit wenigstens einer entsprechenden Säure-Gruppe, vorzugsweise Carboxy-Gruppe, Sulfonsäure-Gruppe, Phosphonsäure-Gruppe, Kombinationen davon oder Mischungen davon, und/oder wenigstens einer entsprechenden Säurehalogenid-Gruppe, vorzugsweise Carbonsäurechlorid-Gruppe, Sulfonsäurechlorid-Gruppe, oder Kombinationen davon, und/oder wenigstens einer entsprechenden Säureanhydrid-Gruppe, vorzugsweise Carbonsäureanhydrid, Sulfonsäureanhydrid oder Kombinationen davon, mit wenigstens einem Alkohol, vorzugsweise aliphatischer Alkohol mit 1 bis 6 C-Atomen, aromatischer Alkohol mit 6 oder mehr C-Atomen oder Mischungen davon, weiter bevorzugt aliphatischer Alkohol mit 1 bis 3 C-Atomen, nach dem Fachmann bekannten Verfahren hergestellt werden, beispielsweise unter Verwendung einer Säure als Katalysator.

Polymere mit wenigstens einer Säurehalogenid-Gruppe, vorzugsweise Carbonsäurehalogenid-Gruppe, die auch als Halogencarbonyl-Gruppe bezeichnet werden kann, Sulfonsäurehalogenid-Gruppe, die auch als Halogensulfonyl-Gruppe bezeichnet werden kann, oder Kombinationen davon, sind dem Fachmann bekannt.

Vorzugsweis werden geeignet Säurehalogenid-Gruppen aus der Gruppe, die aus Carbonsäurechlorid-Gruppe, die auch als Chlorcarbonyl-Gruppe bezeichnet werden kann, Sulfonsäurechlorid-Gruppe, die auch als Chlorsulfonyl-Gruppe bezeichnet werden kann, und Kombinationen besteht, ausgewählt und können ebenfalls nach im Stand der Technik bekannte Syntheseverfahren hergestellt werden.

Geeignete Polymere mit wenigstens einer Carbonsäurechlorid-Gruppe können beispielsweise durch Reaktion des entsprechenden Polymers mit wenigstens einer Carboxy-Gruppe mit Thionylchlorid (SOCl₂), Phosgen (COCl₂), Phosphor(III)-chlorid oder Phosphor(V)-chlorid synthetisiert werden.

Polymere mit wenigstens einer Säureanhydrid-Gruppe, vorzugsweise Carbonsäureanhydrid-Gruppe, Sulfonsäureanhydrid-Gruppe, oder Kombinationen davon, weiter bevorzugt Carbonsäureanhydrid-Gruppe, sind dem Fachmann bekannt und können ebenfalls nach im Stand der Technik bekannte Syntheseverfahren hergestellt werden.

Polymere mit wenigstens einer Säureanhydrid-Gruppe können beispielsweise durch Reaktion eines der vorgenannten Polymere mit wenigstens einer Säurechlorid-Gruppe, vorzugsweise Carbonsäurechlorid-Gruppe, Sulfonsäurechlorid-Gruppe, oder einer Kombination davon, mit dem Salz einer Carbonsäure oder durch Abspaltung von Wasser unter Verwendung eines starken Entwässerungsmittels hergestellt werden, wobei weiter bevorzugt geeignete polymere Polycarbonsäuren oder polymere Polysulfonsäuren verwendet werden können.

Polymere mit wenigstens einer Säureanhydrid-Gruppe, vorzugsweise Carbonsäureanhydrid-Gruppe, können vorzugsweise auch unter Verwendung wenigstens einer geeigneten, ungesättigten Polycarbonsäure, wie vorzugsweise Maleinsäure, Fumarsäure, Methylmaleinsäure (Citraconsäure), Methylfumarsäure (Mesaconsäure), Methylenbutandisäure (Itaconsäure), Tetrahydrophthalsäure oder Aconitsäure, sowie entsprechender Anhydride davon und/oder Mono-ester davon und/oder Bis-ester davon, durch Homo-Polymerisation oder Co-Polymerisation mit vorzugsweise wenigstens einem ethylenisch ungesättigten Monomer, weiter bevorzugt Acrylsäure und deren Estern, Methacrylsäure und deren Estern, Ethylen, Vinylethylen, Vinylethern, Vinylestern, Vinylhalogeniden, Phenylvinylderivaten, beispielsweise Styrol, Allylestern, Methallylestern, Estern der Zimtsäure, Acrylamiden oder Methacrylamiden, alpha-Olefinen, oder N-Vinylpyrrolidon, vorzugsweise unter Einwirkung wenigstens eines Radikalstarters, gamma- und/oder UV-Strahlung, wenigstens eines ionischen Katalysators, elektrischem Strom und/oder von Druck und/oder von Temperatur, hergestellt werden.

Geeignete Polymere mit wenigstens einer Säureanhydrid-Gruppe, vorzugsweise Carbonsäureanhydrid-Gruppe, sind beispielsweise Maleinsäureanhydridfunktionalisierte Polymere, wie beispielsweise Styrol-Maleinsäureanhydrid-Copolymer.

Vorzugsweise weist die wenigstens eine polymerhaltige Grundierungsschicht einen nichtflüchtigen Anteil von 5 Gew.-% bis 70 Gew.-%, vorzugsweise 10 Gew.-% bis 50 Gew.-%, jeweils bezogen auf das Gesamtgewicht aller Bestandteile der polymerhaltigen Grundierungsschicht, auf.

Bei einer bevorzugten Ausführungsform weist die wenigstens eine polymerhaltige Grundierungsschicht einen Restfeuchtegehalt, d.h. Gehalt an Wasser, von höchstens 15 % Gew.-%, vorzugsweise von höchstens 10 Gew-%, vorzugsweise von höchstens 8 Gew.-%, weiter bevorzugt von höchstens 5 Gew.-%, weiter bevorzugt von höchstens 3,5 Gew.-%, weiter bevorzugt von höchstens 1,9 Gew.-%, jeweils bezogen auf das Gesamtgewicht aller Bestandteile der polymerhaltigen Grundierungsschicht, auf.

Weiter bevorzugt weist die wenigstens eine polymerhaltige Grundierungsschicht eine Dicke von 50 nm bis 1000 µm, vorzugsweise von 1 µm bis 100 µm, weiter bevorzugt von 5 µm bis 50 µm, auf.

Die in der vorliegenden Patentanmeldung verwendete Abkürzung "Gew.-%" bezeichnet die Gehaltsangabe "Gewichtsprozent".

Im Folgenden wird die Erfindung anhand von mehreren Ausführungsbeispielen unter Zuhilfenahme der beiliegenden Zeichnungen beispielhaft erläutert.

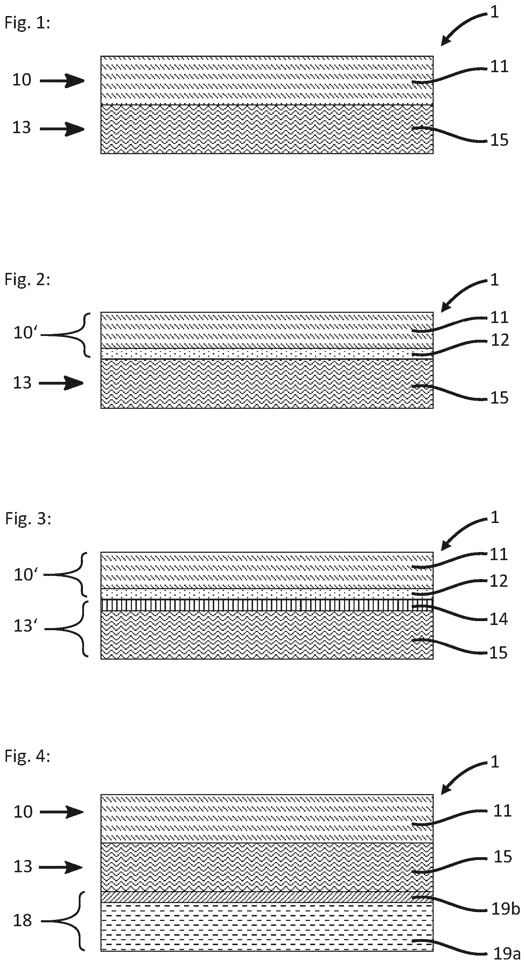

Fig. 1 bis Fig. 4 zeigen schematische Darstellungen einer Transferfolie.

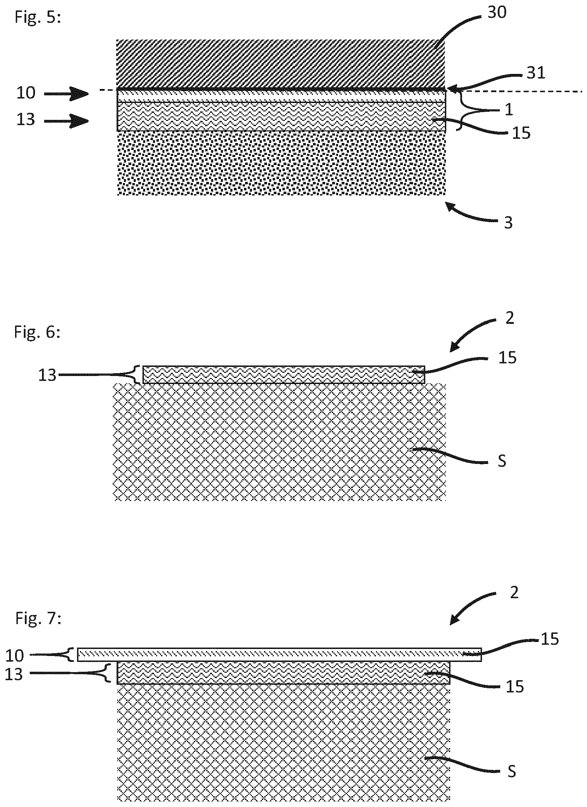

Fig. 5 zeigt schematisch die Anordnung einer Transferfolie in einem Formelement.
Fig. 6 und Fig. 7 zeigen schematische Darstellungen eines dekorierten, mineralischen Verbundkörpers.
Fig. 8 zeigt einen in Beispiel 1 hergestellten dekorierten, mineralischen Verbundkörper.
Fig. 9 und Fig. 10 zeigen REM-Aufnahmen der abgelösten Übertragungslage des in Beispiel 1 hergestellten Verbundkörpers.
Fig. 11 zeigt einen in Vergleichsbeispiel 2 hergestellten Verbundkörper.

Eine erfindungsgemäß zu verwendende Mehrschichtfolie 1, 1' weist eine Trägerlage 10, 10' und eine auf der Trägerlage 10, 10' angeordnete Übertragungslage 13, 13', die wenigstens ein Dekorelement enthält, auf, wobei die Übertragungslage 13, 13' an der der Trägerlage 10, 10' abgewandten Seite wenigstens eine polymerhaltige Grundierungsschicht 15 aufweist.

Vorzugsweise umfasst die Trägerlage 10, 10' wenigstens eine Trägerschicht 11 aus vorzugsweise einem Polyester, beispielsweise einem Polylactid (PLA) oder Polyethylenterephthalat (PET), einem Polyolefin, beispielsweise Polypropylen (PP) oder Polyethylen (PE), oder einer Kombination davon, insbesondere aus PET.

Optional weist die Trägerlage 10, 10' auf der von der Übertragungslage 13, 13' abgewandten Seite wenigstens eine rückseitige Ablöseschicht, die wenigstens ein Wachs, vorzugsweise Montanesterwachs, wenigstens ein Silikon, wenigstens ein Polyurethan oder eine Kombination davon umfasst oder daraus besteht.

Vorzugsweise verhindert eine Anordnung wenigstens eine rückseitige Ablöseschicht auf der Trägerlage 10, 10' ein Verkleben der Schichten während der Herstellung einer erfindungsgemäß zu verwendenden Mehrschichtfolie 1, 1'.

Weiter bevorzugt weist die wenigstens eine Trägerschicht 11 der Trägerlage 10, 10' eine Schichtdicke zwischen 4 µm und 100 µm auf, bevorzugt zwischen 10 µm und 50 µm.

Optional kann die Trägerlage 10, 10' weiterhin wenigstens eine Ablöseschicht 12 umfassen, die auf der der Übertragungslage 13, 13" zugewandten Seite der Trägerlage 10, 10' angeordnet ist.

Vorzugsweise kann die wenigstens eine Ablöseschicht 12 wenigstens ein Wachs, vorzugsweise Montanesterwachs, wenigstens ein Silikon, wenigstens ein Polyurethan oder eine Kombination davon umfassen.

Weiter bevorzugt beeinflusst das wenigstens eine Dekorelement die Oberflächentextur, die Farbe der Oberfläche, die mechanischen Eigenschaften und/oder die chemischen Eigenschaften des dekorierten, mineralischen Verbundkörpers 2, wobei das wenigstens eine Dekorelement vorzugsweise als Motiv, als Dekor, beispielsweise Einzelbilddekor oder Endlosdekor, als Muster, oder einer Kombination davon ausgebildet ist.

Bei einer bevorzugten Ausführungsform ist zwischen der wenigstens einen polymerhaltigen Grundierungsschicht 15 und der Trägerlage 10, 10' wenigstens eine Funktionsschicht 14 angeordnet, wobei vorzugsweise das wenigstens eine Dekorelement in der wenigstens einen Funktionsschicht 14 angeordnet ist.

Vorzugsweise umfasst die zwischen der wenigstens einen polymerhaltigen Grundierungsschicht 15 und der Trägerlage 10, 10' angeordnete wenigstens eine Funktionsschicht 14 wenigstens ein Metall und/oder Halbmetall, Legierungen davon oder Mischung davon, vorzugsweise Aluminium, Eisen, Chrom, Indium, Kupfer, Zinn, Zink, Silizium, Legierungen davon oder Mischungen davon, wenigstens ein Polymer, vorzugsweise ausgewählt aus Cellulosebasierten Polymeren, chlorierten Polyolefinen, Chlorkautschuken, Kolophoniumharzen, Epoxidharzen, EVA-Copolymeren, Formaldehydharzen, Kohlenwasserstoffharzen, Keton- /Aldehydharzen, Maleinatharzen, Melaminharzen, Phenolharzen, Acrylaten, Polyacrylaten, Polyacrylatdispersionen, Polyesterdispersionen, Polyurethandispersionen, Polyetherdispersionen, Polyamidharzen, Polyesterharzen, Polyisocyanaten, Polyolefinharzen, Polystyrolharzen, Polyurethanharzen, Polyvinylacetalen, Polyvinylacetaten, Polyvinylalkoholen, Polyvinylbutyralen, Polyvinylchloriden, Polyvinylpropionaten, Polyvinylpyrrolidonen, Polyvinylidenchloriden, Polyvinylidenfluoriden, Schelllacken, Silikonharzen, Styrol-Acrylat-Dispersionen, Sulfonamidharzen, Harnstoffharzen, Acrylnitril-1,3-Butadien-Styrol (ABS)-Harze und Mischungen davon, oder besteht daraus.

Die zwischen der wenigstens einen polymerhaltigen Grundierungsschicht 15 und der Trägerlage 10, 10' angeordnete wenigstens eine Funktionsschicht 14 kann vorzugsweise weiterhin wenigstens ein Additiv, das vorzugsweise aus der Gruppe ausgewählt wird, die aus Hydrophobierungsmitteln, Verlaufsadditiven, Entschäumern, Farbmitteln, vorzugsweise ausgewählt aus Farbstoffen, organischen Pigmenten, anorganischen Pigmenten und Mischungen davon, Füllstoffe, Rheologie-Additiven, Weichmachern, Stabilisatoren, Lichtschutzmittel, Antioxidantien, Flammschutzmittel, Verstärkungsstoffen und Mischungen davon besteht, umfassen.

Die zwischen der wenigstens einen polymerhaltigen Grundierungsschicht 15 und der Trägerlage 10, 10' angeordnete wenigstens eine Funktionsschicht 14 wird weiter bevorzugt aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opaken Reflexionsschichten, transparenten Reflexionsschichten, metallischen Reflexionsschichten oder dielektrischen Reflexionsschichten, optisch variablen Schichten, optisch aktiven Schichten, Interferenz-Mehrschichtsystemen, Volumenhologrammschichten, Flüssigkristallschichten, insbesondere cholesterischen Flüssigkristallschichten, elektrisch leitfähigen Schichten, Antennenschichten, Elektrodenschichten, magnetische Schichten, Magnetspeicherschichten, Barriereschichten und Kombinationen davon besteht, ausgewählt.

Vorzugsweise kann an der der Trägerlage 10, 10' abgewandten Seite der wenigstens einen polymerhaltigen Grundierungsschicht 15 eine Schutzlage 18 angeordnet sein.

Die Schutzlage 18 verhindert vorzugsweise eine Beschädigung und/oder Verschmutzung der Grundierungsschicht 15, beispielsweise beim Transport einer erfindungsgemäß zu verwendenden Transferfolie 1 und kann vor Verwendung der Transferfolie 1 von der Grundierungsschicht 15 abgezogen werden, vorzugsweise
bei Alternative I) bevor die wenigstens eine polymerhaltige Grundierungsschicht 15 zumindest teilweise mit der fließfähigen oder plastisch verformbaren, mineralischen Baustoff-Mischung in Kontakt gebracht wird,
   und/oder
bei Alternative II) bevor die wenigstens eine Mehrschichtfolie 1, 1' in und/oder nach Schritt c) mit der wenigstens einen polymerhaltigen Grundierungsschicht 15 zumindest teilweise auf dem formstabilen, mineralischen Grünkörper 3a angeordnet wird.

Vorzugsweise umfasst die Schutzlage 18 wenigstens eine Trägerschicht 19a aus vorzugsweise einem Polyester, einem Polyolefin, einem Polyurethan oder einer Kombination davon, insbesondere aus PET.

Die Schutzlage 18 kann in einer alternativen Ausführungsform eine insbesondere selbsttragende Lackschicht sein. Die Lackschicht ist beispielsweise aus Polyurethan mit einer Dicke zwischen 10 µm und 250 µm und kann vor Verwendung der Transferfolie 1 von der Grundierungsschicht 15 abgezogen werden.

Die Schutzlage 18 kann in einer alternativen Ausführung eine insbesondere nicht selbsttragende Lackschicht sein. Die Lackschicht weist Bindemittel beispielsweise auf Basis von Polyester und/oder von Maleinatharzen und/oder von Polycarbonaten auf und weist eine Dicke zwischen 0,1 µm und 5 µm, bevorzugt 0,5 µm bis 2 µm auf und kann während der Verwendung der Transferfolie 1 auf der Grundierungsschicht 15 verbleiben und löst sich insbesondere zumindest teilweise auf, wenn die Grundierungsschicht 15 mit der noch fließfähigen Baustoff-Mischung in Kontakt gebracht wird.

Weiter bevorzugt weist die wenigstens eine Trägerschicht 10a der Schutzlage 18 eine Schichtdicke zwischen 4 µm und 100 µm auf, bevorzugt zwischen 10 µm und 50 µm.

Optional kann die Schutzlage 18 weiterhin wenigstens eine Ablöseschicht 19b umfassen, die auf der der Grundierungsschicht 15 zugewandten Seite der Schutzlage 18 angeordnet ist.

Vorzugsweise kann die wenigstens eine Ablöseschicht 19b wenigstens ein Wachs, vorzugsweise Montanesterwachs, wenigstens ein Silikon, wenigstens ein Polyurethan oder eine Kombination davon umfassen.

Das erfindungsgemäße Verfahren zur Herstellung eines dekorierten, mineralischen Verbundkörpers 2 unter Verwendung wenigstens einer Mehrschichtfolie 1, 1' umfasst folgende Schritte:
a) Bereitstellen wenigstens eines Formelements 30, vorzugsweise Schalung, mit wenigstens einer Außenfläche und wenigstens einer Innenfläche 31,
b) Applizieren einer fließfähigen oder plastisch verformbaren, mineralischen Baustoff-Mischung, die Wasser und wenigstens ein mineralisches Bindemittel umfasst, auf die wenigstens eine Innenfläche 31 des Formelements 30, vorzugsweise Schalung,
c) zumindest teilweises Erstarren der mineralischen Baustoff-Mischung unter Erhalt eines formstabilen, mineralischen Grünkörpers 3a, und
d) zumindest teilweises Erhärten der mineralischen Baustoff-Mischung, unter Erhalt eines mineralischen Verbundkörpers 2,
   wobei die Mehrschichtfolie 1, 1'eine Trägerlage 10, 10' und eine auf der Trägerlage 10, 10' angeordnete Übertragungslage 13, 13', die wenigstens ein Dekorelement enthält, aufweist,

wobei die Übertragungslage 13, 13' an der der Trägerlage 10, 10' abgewandten Seite wenigstens eine polymerhaltige Grundierungsschicht 15 aufweist, und
wobei I) die wenigstens eine Mehrschichtfolie 1, 1' vor Schritt b) mit der von der wenigstens einen polymerhaltigen Grundierungsschicht 15 abgewandten Seite der Trägerlage 10, 10' auf der wenigstens einen Innenfläche 31 des bereitgestellten Formelements 30, vorzugsweise Schalung, angeordnet wird, sodass vorzugsweise die wenigstes eine polymerhaltige Grundierungsschicht 15 der Mehrschichtfolie 1, 1' von der wenigstens einen Innenfläche 31 des Formelements 30, vorzugsweise Schalung, weg weist, und wobei in Schritt b) die wenigstens eine polymerhaltige Grundierungsschicht 15 zumindest teilweise mit der fließfähigen oder plastisch verformbaren, mineralischen Baustoff-Mischung in Kontakt gebracht wird, wobei in Schritt c) ein dekorierter, formstabiler, mineralischer Grünkörper 3 erhalten wird,
   und/oder
wobei II) die wenigstens eine Mehrschichtfolie 1, 1' in und/oder nach Schritt c) mit der wenigstens einen polymerhaltigen Grundierungsschicht 15 auf dem formstabilen, mineralischen Grünkörper 3a angeordnet wird, wobei ein dekorierter, formstabiler, mineralischer Grünkörper 3 erhalten wird, und
wobei bei Alternative I) und II) nach Schritt d) ein dekorierter, mineralischer Verbundkörper 2 erhalten wird.

Das im erfindungsgemäßen Verfahren verwendet wenigstens eine Formelement 30 umfasst wenigstens eine Außenfläche und wenigstens eine Innenfläche 30, wobei die wenigstens eine Innenfläche 31 des Formelements 30 vorzugsweise eine zweidimensionale oder drei-dimensionale geometrische Form aufweisen kann. Die Innenfläche 31 des Formelements 30 kann alternativ oder zusätzlich auch eine Strukturierung in Form einer makroskopischen und/oder mikroskopischen Struktur aufweisen.

Vorzugsweise kann die wenigstens eine erfindungsgemäß zu verwendende Mehrschichtfolie 1, 1' durch wenigstens eine Dekorwalze zumindest teildekoriert sein bzw. wenigstens ein Dekormuster enthalten.

Eine optional an der der Trägerlage 10, 10' abgewandten Seite der wenigstens einen polymerhaltigen Grundierungsschicht 15 angeordnete Schutzlage 18 wird im erfindungsgemäßen Verfahren bei Alternative I) vorzugsweise vor dem zumindest teilweisen in Kontakt bringen der wenigstens einen polymerhaltigen Grundierungsschicht 15 mit der fließfähigen oder plastisch verformbaren, mineralischen Baustoff-Mischung, und/oder bei Alternative II) vorzugsweise vor dem Anordnen der wenigstens einen polymerhaltigen Grundierungsschicht 15 auf dem formstabilen, mineralischen Grünkörper 3a, zumindest teilweise, vorzugsweise vollständig, entfernt.

Ein dekorierter, formstabiler, mineralischer Grünkörper 3 umfasst vorzugsweise eine zumindest teilweise erstarrte mineralische Baustoff-Mischung und wenigstens eine, an wenigstens einer Oberfläche des Grünkörpers 3 zumindest teilweise angeordnete Übertragungslage 13, 13', die wenigstens ein Dekorelement enthält, wobei die dem Grünkörper 3 zugewandte Seite der Übertragungslage 13, 13' durch wenigstens eine polymerhaltige Grundierungsschicht 15 gebildet ist, die mit dem Grünkörper 3 zumindest formschlüssig verbunden ist. Optional ist auf der wenigstens einen Übertragungslage 13, 13' weiterhin wenigstens eine Trägerlage 10, 10' auf der dem Grünkörper 3 abgewandten Seite der Übertragungslage 13, 13' angeordnet.

Ein erfindungsgemäßer dekorierter, mineralischer Verbundkörper 2, insbesondere hergestellt nach einem Verfahren der Ansprüche 1 bis 26, umfasst ein mineralisches Substrat S und wenigstens eine, an wenigstens einer Oberfläche des Substrates S zumindest teilweise angeordnete Übertragungslage 13, 13', die wenigstens ein Dekorelement enthält, wobei die dem Substrat S zugewandte Seite der Übertragungslage 13, 13" durch wenigstens eine polymerhaltige Grundierungsschicht 15 gebildet ist, die mit dem Substrat S zumindest formschlüssig verbunden ist.

Vorzugsweise umfasst das mineralische Substrat S des erfindungsgemäßen dekorierten, mineralischen Verbundkörpers 2 wenigstens einen, zumindest teilweise erhärteten mineralischen Baustoff, der aus der Gruppe, die aus Beton, Mörtel, Kalksandstein, Keramik und Kombinationen davon besteht, ausgewählt wird, oder er besteht daraus.

Weiter bevorzugt ist auf der wenigstens einen Übertragungslage 13, 13' wenigstens eine Trägerlage 10, 10' angeordnet, wobei die wenigstens eine Übertragungslage 13, 13" und die wenigstens eine Trägerlage 10, 10' eine Mehrschichtfolie 1, 1' bilden, die vorzugsweise als Laminierfolie ausgebildet ist.

Eine Mehrschichtfolie 1, 1', die vorzugsweise als Laminierfolie ausgebildet ist, kann vorzugsweise kleiner als die wenigstens eine Oberfläche des Substrates S, an der die Übertragungslage 13, 13', die wenigstens ein Dekorelement enthält, zumindest teilweise angeordnet, vorzugsweise gebunden, ist, ausgestaltet sein.

Alternativ kann eine Mehrschichtfolie 1, 1', die vorzugsweise als Laminierfolie ausgebildet ist, genauso groß wie die wenigstens eine Oberfläche des Substrates S, an der die Übertragungslage 13, 13', die wenigstens ein Dekorelement enthält, zumindest teilweise angeordnet, vorzugsweise gebunden, ist, ausgestaltet sein.

Alternativ kann eine Mehrschichtfolie 1, 1', die vorzugsweise als Laminierfolie ausgebildet ist, größer als die wenigstens eine Oberfläche des Substrates S, an der die Übertragungslage 13, 13', die wenigstens ein Dekorelement enthält, zumindest teilweise angeordnet, vorzugsweise gebundene, ist, ausgestaltet sein, wobei weiter bevorzugt die Mehrschichtfolie 1, 1' zumindest an einer Kante des dekorierten, mineralischen Verbundkörpers 2 einen Überstand ausbildet.

Vorzugsweise kann der Überstand der Mehrschichtfolie 1, 1', durch ein fügendes Fertigungsverfahren, beispielsweise durch Bördeln, Falzen und/oder Biegen nach dem Anordnen der Mehrschichtfolie1,1' auf zumindest Teilbereichen der wenigstens einen Oberfläche des dekorierten Objekts ein Verbinden von zwei oder mehreren erfindungsgemäß dekorierten Verbundkörpern 2 ermöglichen.

Vorzugsweise kann die Übertragungslage 13, 13' und/oder die Transferlage 10, 10' nach dem Aufbringen auf den dekorierten, mineralischen Verbundkörper 2 modifiziert werden, beispielsweise durch zumindest teilweises Aufbringen, vorzugsweise Überdrucken und/oder Übergießen und/oder Überfluten, wenigstens einer weiteren Schicht, beispielsweise Schutzschicht und/oder Lackschicht, durch den Fachmann bekannte Druck- und/oder Gießverfahren.

Eine erfindungsgemäß zu verwendende Mehrschichtfolie 1, 1' wird vorzugsweise durch sequenzielles, vorzugsweise vollflächiges oder partielles, Aufbringen der einzelnen Schichten der Übertragungslage 13, 13' auf die Transferlage 10, 10' durch im Stand der Technik bekannte Verfahren, beispielsweise durch Druckverfahren wie Tiefdruck und/oder Siebdruck und/oder Digitaldruck und/oder Flexodruck und/oder Inkjetdruck und/oder Offsetdruck, und/oder durch Gießverfahren wie Schlitzgießen, hergestellt.

Die mit diesen Verfahren hergestellten Schichten sind beispielsweise Schutzschichten, Barriereschichten, Dekorschichten, Haftvermittlerschichten, Kleberschichten, Ablöseschichten, Farbschichten, welche jeweils vollflächig und/oder partiell vorliegen können.

Weiterhin ist das, vorzugsweise vollflächige oder partielle, Aufbringen aufgedampfter und/oder aufgedruckter Metallschichten und/oder Metalloxidschichten als Dekorelement oder Dekorschicht möglich. Aufgedampfte Metall- und/oder Metalloxidschichten können beispielsweise durch im Stand der Technik bekannte Verfahren, beispielsweise physikalische Gasphasenabscheidung (PVD) oder chemische Gasphasenabscheidung (CVD), aufgebracht werden.

Die mit diesen Verfahren hergestellten Schichten sind beispielsweise Reflexionsschichten, leitfähige Schichten, Barriereschichten, Dekorschichten, welche jeweils vollflächig und/oder partiell vorliegen können.

Weiter bevorzugt wird wenigstens eine Dekorschicht nach Abformung einer optisch aktiven Oberflächenstruktur in eine Replikationsschicht vorzugsweise jeweils bereichsweise oder vollflächig auf die Replikationsschicht aufgedampft.

Möglich ist auch das vollflächige Aufbringen gefolgt von einem bereichsweisen Entfernen der wenigstens einen Dekorschicht mittels bekannter Verfahren wie Waschverfahren oder Lift-Off-Lacke oder Ätzverfahren oder Maskenbelichtungsverfahren unter Zuhilfenahme einer Photoresistschicht.

Vorzugsweise wird auf die Transferlage 10, 10', die wenigstens eine Trägerschicht aus einem Polyester, einem Polyolefin, oder einer Kombination davon, insbesondere aus PET, umfassen kann, zunächst die wenigstens eine polymerhaltige Grundierungsschicht 15 der Übertragungslage 13, 13' durch wenigstens eines der vorgenannten Druck- und/oder Gießverfahren angeordnet bzw. aufgebracht, wobei weiter bevorzugt die wenigstens eine polymerhaltige Grundierungsschicht 15 mit einem Auftragsgewicht aus einem Bereich von 0,5 g/m² bis 500 g/m², vorzugsweise von 1 g/m² bis 50 g/m², vorzugsweise von 5 g/m² bis 25 g/m², vorzugsweise von 9 g/m² bis 15 g/m², jeweils bezogen auf das Gesamtgewicht aller Bestandteile der polymerhaltigen Grundierungsschicht 15, aufgebracht wird.

Weiter bevorzugt wird die wenigstens eine polymerhaltige Grundierungsschicht 15 unter Verwendung einer wässrigen Polymer-Dispersion hergestellt, die einen pH-Wert von 1,0 bis 9,0, vorzugsweise von 1,5 bis 7,0, vorzugsweise von 2,0 bis 6,0, vorzugsweise von 3,0 bis 5,0, jeweils gemessen bei einer Temperatur von 25°C und einem Druck von 1013 mbar, auf.

### Beispiel 1

Ein mit einer mindestens 50 nm dicken Schicht eines Montanesterwachs beschichteter PET-Träger (Dicke des PET-Trägers von 5 µm bis 150 µm, bevorzugt von 7 µm bis 100 µm) als Trägerlage wurde mit einer wässrigen Grundierung aus WÜKOSEAL^{®} VP Ku (MÜNZING CHEMIE GmbH), bei dem es sich um eine wässrige Dispersion eines Vinylacetat-Ethylen-Copolymers mit einem pH-Wert gemäß Herstellerangabe von 4,5 ± 1 handelt, in einem Gemisch aus Wasser und Isopropanol, Festkörper ca. 15%, typischerweise mit einem Auftragsgewicht von 10 g/m², beschichtet.

Die Beschichtung wurde bis zur Gewichtskonstanz bei Normklima (Lufttemperatur von 23 °C und eine relative Luftfeuchte von 50 %) gemäß DIN EN ISO 291:2008-08 ("Kunststoffe - Normalklimate für Konditionierung und Prüfung (ISO 291:2008) - Deutsche Fassung EN ISO 291:2008, Ausgabedatum: 2008-08) getrocknet und bildete eine geschlossene Übertragungslage der Transferfolie.

Jeweils 50 g EB-Estrichbeton der Firma quick-mix Gruppe GmbH & Co. KG (Osnabrück, DE) wurden mit 6,5 g Wasser angesetzt. Die Transferfolie wurde mit der Transferlage auf einer Platte aus ABS-Material mit 1 mm Stärke angeordnet und der angesetzte Estrichbeton grundierungsseitig jeweils auf die Transferfolie aufgebracht.

Nach vollständiger Aushärtung des Estrichbetons bei Raumtemperatur bildete sich ein mineralischer Verbundkörper, der einseitig mit der jeweils verwendeten Transferfolie beschichtet war. Eine sehr gute Tesafestigkeit wurde nach ca. 5 Tagen Aushärtedauer erreicht.

Anschließend wurde der PET-Träger vom Beton abgelöst, wobei die Übertragungslage auf dem Beton haften blieb und eine glatte Beschichtung auf dem Verbundkörper bildete.

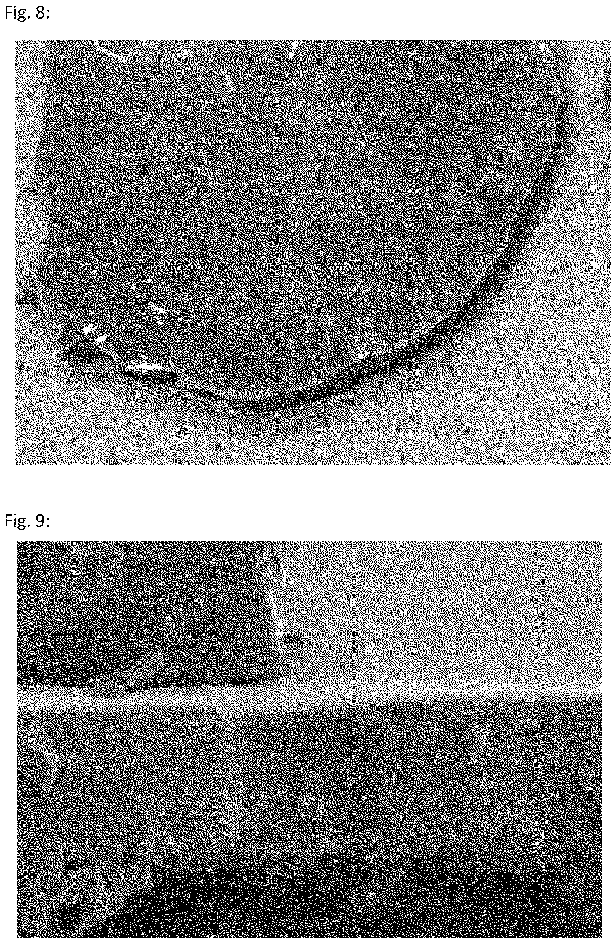

In Fig. 8 ist ein hergestellter Verbundkörper abgebildet, wobei die Oberseite des Verbundkörpers durch die auf dem Beton haftende Übertragungslage gebildet wurde.

Die Haftung der Übertragungslage auf dem Beton wurde mittels Gitterschnitt nach DIN EN ISO 2409: 2013-06 überprüft.

Dabei wurden mit Hilfe eines Messers und bevorzugt mit Hilfe einer Schablone jeweils 6 Schnitte senkrecht und 6 Schnitte waagerecht (im Winkel von 90° zu den senkrechten Schnitten) in die Beschichtung bis zum Untergrund geschnitten. Die Schnittbreite war abhängig von der Schichtdicke der Beschichtung. Bei Beschichtungen mit einer Schichtdicke von weniger als 60 µm beträgt der Abstand der Schnitte bevorzugt etwa 1 mm.

Auf das entstandene Quadrat der Schnitte (Messfläche) wurde ein Klarsichtklebeband oder ein Kreppklebeband mit einer Klebkraft von 6 N/25 mm bis 10 N/25 mm aufgeklebt. Dieses wurde in einer Zeit von 0,5 bis 1 Sekunde in einem Winkel von 60° abgezogen.

Die Auswertung erfolgte gemäß DIN EN ISO 2409: 2013-06 durch visuelle Bewertung der Messfläche und Einteilung in Gitterschnitt-Kennwerte von 0 (sehr gute Haftfestigkeit) bis 5 (sehr schlechte Haftfestigkeit), abgekürzt GT 0 bis GT 5, oder gemäß ASTM D 3359 - 09, Test Methode B.

Die Kriterien für eine Einteilung der entsprechenden Kennwerte sind in nachfolgender Tabelle zusammengefasst:

| **Beschreibung** | **Oberfläche** | **Kennwert ISO** | **Kennwert ASTM** |
|---|---|---|---|
| Die Schnittränder sind vollkommen glatt, kein Teilstück des Anstrichs ist abgeplatzt. | - | GT 0 | 5B |
| An den Schnittpunkten der Gitterlinien sind kleine Splitter des Anstrichs abgeplatzt; abgeplatzte Fläche etwa 5% der Teilstücke. | 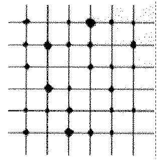 | GT 1 | 4B |
| Der Anstrich ist längs der Schnittränder und/oder an den Schnittpunkten der Gitterlinien abgeplatzt; abgeplatzte Fläche etwa 15% der Teilstücke. | 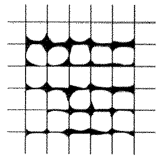 | GT 2 | 3B |
| Der Anstrich ist längs der Schnittränder teilweise oder ganz in breiten Streifen abgeplatzt und/oder der Anstrich ist von einzelnen Teilstücken ganz oder teilweise abgeplatzt; abgeplatzte Fläche etwa 35% der Teilstücke. | 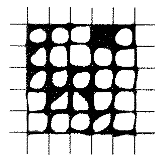 | GT 3 | 2B |
| Der Anstrich ist längs der Schnittränder in breiten Streifen und/oder von einzelnen Teilstücken ganz oder teilweise abgeplatzt; abgeplatzte Fläche etwa 65% der Teilstücke. | 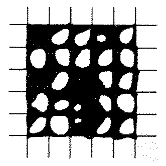 | GT 4 | 1B |
| Abgeplatzte Fläche mehr als 65% der Teilstücke. | - | GT 5 | 0B |

Nach einer Aushärtedauer von 28 Tagen wurden an den hergestellten Verbundkörpern Gitterschnitt-Kennwerte zwischen 5B und 4B gemessen.

Für die Beurteilung der Haftfestigkeit der Mehrschichtfolie und/oder der Übertragungslage der Mehrschichtfolie wurde auch ein sogenannter Tesatest durchgeführt. Dabei wurde ein insbesondere 45 mm langer und 25 mm breiter selbstklebender Klebstoffstreifen (Marke Tesa, Typ 4657) auf eine mit der Mehrschichtfolie und/oder der Übertragungslage der Mehrschichtfolie beschichtete erstarrte Baustoff-Mischung falten- und blasenfrei mittig aufgeklebt und manuell angedrückt.

Die erstarrte und beschichtete Baustoff-Mischung wurde in eine Material-Prüfmaschinen Z005 der Fa. ZwickRoell GmbH & Co. KG (Ulm, DE) eingespannt. In einem Abzugswinkel von 90° wurde mit einer Geschwindigkeit von 500 mm/min der Klebstoffstreifen abgezogen und dabei die Kraft gemessen, die notwendig war, um den Klebstoffstreifen von der Mehrschichtfolie und/oder der Übertragungslage der Mehrschichtfolie zu lösen.

Die Versuche zeigten überraschend, dass die Mehrschichtfolie und/oder die Übertragungslage der Mehrschichtfolie weitgehend vollständig auf der erstarrten Baustoff-Mischung verblieb und lediglich der Klebstoffstreifen wieder abgezogen wurde. Die dabei gemessene Kraft betrug zwischen 400 cN und 1000 cN.

Die Haftkraft zwischen der Mehrschichtfolie und/oder der Übertragungslage der Mehrschichtfolie zu der erstarrten Baustoff-Mischung sollte demnach höher sein als diese gemessene Haftkraft, da nach Ablösen des Klebstoffstreifens von der Mehrschichtfolie und/oder die Übertragungslage unter dieser gemessenen Haftkraft noch keine Defekte an der Mehrschichtfolie und/oder der Übertragungslage der Mehrschichtfolie auftraten.

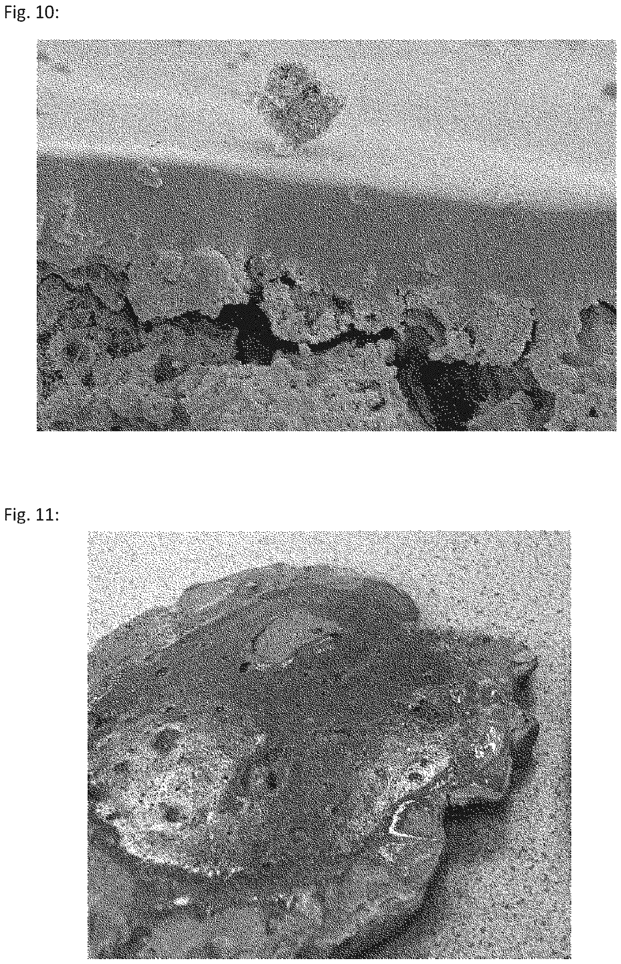

Weiterhin wurden von Teilen der Verbundkörper REM-Aufnahmen angefertigt, die in Fig. 9 und Fig. 10 dargestellt sind.

Für die REM-Aufnahmen wurde dabei jeweils ein ca. 10 × 10 × 5 mm (10 × 10 mm Grundfläche, Dicke 5 mm) Probenkörper aus dem zu untersuchenden beschichteten, Verbundkörper herausgebrochen und durch Sputtern mit Gold beschichtet.

In den REM-Aufnahmen wurden jeweils die Abbruchkanten der Probenkörpers untersucht.

Die REM-Aufnahmen wurden jeweils mit folgenden Parametern aufgenommen: 8 kV Spannung, 20 mm Probenabstand, Spotsize 39, Betrachtungswinkel 80°.

Wie in Fig. 9 und Fig. 10 gut zu erkennen ist, wies die Polymerschicht der Übertragungslage eine starke Haftung zum Beton auf. Bei einigen Abrisskanten/Bruchkanten blieb deutlich eine dünne Schicht Beton am Polymer haften. Weiterhin zeigte sich, dass der Beton mechanisch in der Polymerschicht "verankert" war. Es zeigte sich insbesondere, dass die Polymerschicht eine geschlossene und glatte Oberfläche bildete, die den Beton versiegelt.

### Vergleichsbeispiel 2

Um zu überprüfen, welchen Einfluss die Transferlage auf die Stabilität und Haftkraft der Übertragungslage hat, wurde wie oben beschrieben 50 g EB-Estrichbeton mit Wasser angesetzt und die feuchte Mischung auf eine Platte aus ABS-Material mit 1 mm Stärke als Unterlage gegeben. Die der ABS-Platte gegenüberliegende Oberfläche der Mischung wurde glattgestrichen und mit einer wässrigen Grundierung aus WÜKOSEAL^{®} VP Ku in einem Gemisch aus Wasser und Isopropanol, Festkörper ca. 15% mittels Pinselauftrag beschichtet.

Um eine möglichst vollständige Beschichtung zu erhalten, war ein wesentlich höheres Auftragsgewicht nötig.

Nach dem Austrocknen der beschichteten Beton-Mischung, wie oben in Beispiel 1 angegeben, wurde der erhaltene Prüfkörper visuell untersucht.

Trotz des höheren Auftragsgewichts der Beschichtung bildete sich nach dem Austrocknen des Betons auf der beschichteten Oberfläche kein geschlossener Film aus, wie in Fig. 11 zu erkennen ist.

### Bezugszeichenliste

- 1, 1': Mehrschichtfolie
- 2: dekorierter, mineralischer Verbundkörpers
- 3: dekorierter, formstabiler, mineralischer Grünkörper
- 3a: formstabiler, mineralischer Grünkörper

- 10, 10': Trägerlage
- 11: Trägerschicht
- 12: Ablöseschicht

- 13, 13': Übertragungslage
- 14: Funktionsschicht
- 15: Polymerhaltige Grundierungsschicht

- 18: Schutzlage
- 19a: Trägerschicht
- 19b: Ablöseschicht

- 30: Formelement
- 31: Innenfläche

- S: mineralisches Substrat

## Patentansprüche

1. Verfahren zur Herstellung eines dekorierten, mineralischen Verbundkörpers (2) unter Verwendung wenigstens einer Mehrschichtfolie (1, 1'), wobei das Verfahren folgende Schritte umfasst:
a) Bereitstellen wenigstens eines Formelements (30), vorzugsweise Schalung, mit wenigstens einer Außenfläche und wenigstens einer Innenfläche (31),
b) Applizieren einer fließfähigen oder plastisch verformbaren, mineralischen Baustoff-Mischung, die Wasser und wenigstens ein mineralisches Bindemittel umfasst, auf die wenigstens eine Innenfläche (31) des Formelements (30), vorzugsweise Schalung,
c) zumindest teilweises Erstarren der mineralischen Baustoff-Mischung unter Erhalt eines formstabilen, mineralischen Grünkörpers (3a), und
d) zumindest teilweises Erhärten der mineralischen Baustoff-Mischung,
**dadurch gekennzeichnet, dass**
die Mehrschichtfolie (1, 1') eine Trägerlage (10, 10') und eine auf der Trägerlage (10, 10') angeordnete Übertragungslage (13, 13'), die wenigstens ein Dekorelement enthält, aufweist,
wobei die Übertragungslage (13, 13') an der der Trägerlage (10, 10') abgewandten Seite wenigstens eine polymerhaltige Grundierungsschicht (15) aufweist, und
wobei I) die wenigstens eine Mehrschichtfolie (1, 1') vor Schritt b) mit der von der wenigstens einen polymerhaltigen Grundierungsschicht (15) abgewandten Seite der Trägerlage (10, 10') auf der wenigstens einen Innenfläche (31) des bereitgestellten Formelements (30), vorzugsweise Schalung, angeordnet wird und in Schritt b) die wenigstens eine polymerhaltige Grundierungsschicht (15) zumindest teilweise mit der fließfähigen oder plastisch verformbaren, mineralischen Baustoff-Mischung in Kontakt gebracht wird, wobei in Schritt c) ein dekorierter, formstabiler, mineralischer Grünkörper (3) erhalten wird,
und/oder
wobei II) die wenigstens eine Mehrschichtfolie (1, 1') in und/oder nach Schritt c) mit der wenigstens einen polymerhaltigen Grundierungsschicht (15) zumindest teilweise auf dem formstabilen, mineralischen Grünkörper (3a) angeordnet wird, wobei ein dekorierter, formstabiler, mineralischer Grünkörper (3) erhalten wird, und
wobei bei Alternative I) und II) nach Schritt d) ein dekorierter, mineralischer Verbundkörper (2) erhalten wird,
wobei die wenigstens eine polymerhaltige Grundierungsschicht (15) wenigstens ein Polymer umfasst, das wenigstens eine dissoziationsfähige, funktionelle Gruppe aufweist,
und wobei die wenigstens eine dissoziationsfähige, funktionelle Gruppe jeweils unabhängig voneinander eine Amino-Gruppe und/oder eine Hydroxy-Gruppe und/oder eine freie Säure-Gruppe, und/oder eine verkappte Säure-Gruppe, und/oder eine Kombination davon ist.

2. Verfahren nach Anspruch 1,
**dadurch gekennzeichnet, dass**
das wenigstens eine mineralische Bindemittel ein hydraulisches Bindemittel, ein nicht-hydraulisches Bindemittel oder eine Mischung davon umfasst,
und/oder
dass das wenigstens eine mineralische Bindemittel aus der Gruppe ausgewählt wird, die aus Calciumsilikathydraten, Zement, Kalk, Ton, Gips, Lehm, Magnesiabinder und Kombinationen davon besteht.

3. Verfahren nach einem der vorherigen Ansprüche,
**dadurch gekennzeichnet, dass**
die mineralische Baustoff-Mischung Beton, Mörtel, Kalksandstein, Silikat-Keramik oder eine Kombination davon umfasst oder daraus besteht.

4. Verfahren nach einem der Ansprüche 1 bis 3,
**dadurch gekennzeichnet, dass**
die mineralische Baustoff-Mischung Beton oder Mörtel umfasst oder daraus besteht, wobei das wenigstens eine mineralische Bindemittel Zement umfasst oder daraus besteht, und wobei die mineralische Baustoff-Mischung weiterhin Gesteinskörnung umfasst.

5. Verfahren nach einem der Ansprüche 1 bis 3,
**dadurch gekennzeichnet, dass**
die mineralische Baustoff-Mischung Kalksandstein oder Porenbeton umfasst oder daraus besteht, wobei das wenigstens eine mineralische Bindemittel ein Calciumsilikathydrat umfasst oder daraus besteht,
wobei in Schritt d) der dekorierte, formstabile, mineralische Grünkörper (3) hydrothermal gehärtet wird, vorzugsweise bei einer Temperatur aus einem Bereich von 100°C bis 300°C in Gegenwart von Wasserdampf unter Erhalt eines dekorierten, mineralischen Verbundkörpers (2).

6. Verfahren nach einem der Ansprüche 1 bis 3,
**dadurch gekennzeichnet, dass**
die mineralische Baustoff-Mischung eine Silikat-Keramik, vorzugsweise Porzellan, umfasst oder daraus besteht, wobei das wenigstens eine mineralische Bindemittel ein Tonmineral, vorzugsweise Kaolinit, umfasst oder daraus besteht,
wobei in Schritt c) mittels Pressen, Schlickerguss, Spritzguss, Foliengießen, Modellieren und/oder Extrudieren ein formstabiler, mineralischer Grünkörper (3a) erhalten wird, und
wobei in Schritt d) der dekorierte, formstabile, mineralische Grünkörper (3) gebrannt wird, vorzugsweise bei einer Temperatur von 850°C oder mehr für einen Zeitraum von wenigstens 12 h, unter Erhalt eines dekorierten, mineralischen Verbundkörpers (2),
wobei insbesondere die wenigstens eine Mehrschichtfolie (1) wenigstens ein feuerfestes Dekorelement, vorzugsweise umfassend ein oder mehrere feuerfeste Pigmente und/oder ein oder mehrere abgeformte Oberflächenreliefs, umfasst.

7. Verfahren nach einem der vorherigen Ansprüche,
**dadurch gekennzeichnet, dass**
die Trägerlage (10, 10') wenigstens eine Trägerschicht (11) aus einem Polyester, einem Polyolefin oder einer Kombination davon, insbesondere aus PET, umfasst,
und/oder
dass die wenigstens eine Trägerschicht (11) der Trägerlage (10, 10') eine Schichtdicke zwischen 4 µm und 100 µm aufweist, bevorzugt zwischen 10 µm und 50 µm.

8. Verfahren nach einem der vorherigen Ansprüche,
**dadurch gekennzeichnet, dass**
die Trägerlage (10, 10') weiterhin wenigstens eine Ablöseschicht (12) umfasst,
die auf der der Übertragungslage (13, 13') zugewandten Seite der Trägerlage (10, 10') angeordnet ist,
wobei insbesondere die wenigstens eine Ablöseschicht (12) wenigstens ein Wachs, vorzugsweise Montanesterwachs, wenigstens ein Silikon, wenigstens ein Polyurethan oder eine Kombination davon umfasst.

9. Verfahren nach einem der vorherigen Ansprüche,
**dadurch gekennzeichnet, dass**
die eine freie Säure-Gruppe, aus der Gruppe ausgewählt wird, die aus Carboxy-Gruppe, Sulfonsäure-Gruppe, Schwefelsäure-Monoester-Gruppe, Phosphonsäure-Gruppe, Phosphorsäure-Monoester-Gruppe und Kombinationen davon, vorzugsweise Carboxy-Gruppe, Sulfonsäure-Gruppe und Kombinationen davon, weiter bevorzugt Carboxy-Gruppe, besteht, und/oder die eine verkappte Säure-Gruppe aus der Gruppe ausgewählt wird, die aus Carbonsäureester-Gruppe, Carbonsäureanhydrid-Gruppe, Carbonsäurehalogenid-Gruppe, Sulfonsäureester-Gruppe, Sulfonsäureanhydrid-Gruppen, Sulfonsäurehalogenid-Gruppe, Phosphonsäureester-Gruppe und Kombinationen davon, weiter bevorzugt Carbonsäureester-Gruppe, Carbonsäureanhydrid-Gruppe, Sulfonsäureester-Gruppe und Kombinationen davon, weiter bevorzugt Carbonsäureester-Gruppe, Carbonsäureanhydrid-Gruppe und Kombinationen davon, weiter bevorzugt Carbonsäureester-Gruppe, Sulfonsäureester-Gruppe und Kombinationen davon, weiter bevorzugt Carbonsäureester-Gruppe, besteht,
und/oder
dass die wenigstens eine polymerhaltige Grundierungsschicht (15) wenigstens ein Polymer mit wenigstens einer freien Säure-Gruppe, die aus der Gruppe ausgewählt wird, die aus Carboxy-Gruppe, Sulfonsäure-Gruppe, Phosphonsäure-Gruppe und Kombinationen davon besteht, und/oder wenigstens ein Polymer mit wenigstens einer verkappten Säure-Gruppe, die aus der Gruppe ausgewählt wird, die aus Carbonsäureester-Gruppe, Carbonsäureanhydrid-Gruppe, Sulfonsäureester-Gruppe, Sulfonsäureanhydrid-Gruppe und Kombinationen davon besteht, umfasst oder daraus besteht,
und/oder
dass die wenigstens eine polymerhaltige Grundierungsschicht (15) wenigstens ein Polymer mit wenigstens einer freien Säure-Gruppe, das aus der Gruppe, die aus Epoxyd-Polymeren und -Copolymeren jeweils mit wenigstens einer freien Säure-Gruppe, Acryl-Polymeren und -Copolymeren mit jeweils wenigstens einer freien Säure-Gruppe, Methacryl-Polymeren und -Copolymeren mit jeweils wenigstens einer freien Säure-Gruppe, Polyurethan-Polymeren und -Copolymeren mit jeweils wenigstens einer freien Säure-Gruppe und Mischungen davon, vorzugsweise Acryl-Polymeren mit jeweils wenigstens einer freien Säure-Gruppe, Methacryl-Polymeren mit jeweils wenigstens einer freien Säure-Gruppe, Polyurethan-Polymeren mit jeweils wenigstens einer freien Säure-Gruppe, Copolymeren davon und Mischungen davon besteht, ausgewählt wird, und/oder wenigstens ein Polymer mit wenigstens einer verkappten Säure-Gruppe, das aus der Gruppe, die aus Epoxyd-Polymeren und - Copolymeren mit jeweils wenigstens einer verkappten Säure-Gruppe, Acryl-Polymeren und -Copolymeren mit jeweils wenigstens einer verkappten Säure-Gruppe, Methacryl-Polymeren und -Copolymeren mit jeweils wenigstens einer verkappten Säure-Gruppe, Polyurethan-Polymeren und -Copolymeren mit jeweils wenigstens einer verkappten Säure-Gruppe, Styrol-Polymere und -Copolymeren mit jeweils wenigstens einer verkappten Säure-Gruppe und Mischungen davon besteht, ausgewählt wird, umfasst oder daraus besteht.

10. Verfahren nach einem der vorherigen Ansprüche,
**dadurch gekennzeichnet, dass**
die wenigstens eine polymerhaltige Grundierungsschicht (15) einen nichtflüchtigen Anteil von 5 Gew.-% bis 50 Gew.-%, vorzugsweise 10 Gew.-% bis 20 Gew.-%, jeweils bezogen auf das Gesamtgewicht aller Bestandteile der Grundierungsschicht (15), aufweist,
und/oder
dass die wenigstens eine polymerhaltige Grundierungsschicht (15) einen Restfeuchteanteil von höchstens 15 Gew.-%, jeweils bezogen auf das Gesamtgewicht aller Bestandteile der Grundierungsschicht (15), aufweist,
und/oder
dass die wenigstens eine polymerhaltige Grundierungsschicht (15) eine Dicke von 50 nm bis 1000 µm aufweist.

11. Verfahren nach einem der vorherigen Ansprüche,
**dadurch gekennzeichnet, dass**
das wenigstens eine Dekorelement die Oberflächentextur, die Farbe der Oberfläche, die mechanischen Eigenschaften und/oder die chemischen Eigenschaften des dekorierten, mineralischen Verbundkörpers (2) beeinflusst, wobei das wenigstens eine Dekorelement vorzugsweise als Motiv, als Dekor, beispielsweise Einzelbilddekor oder Endlosdekor, als Muster, oder einer Kombination davon ausgebildet ist.

12. Verfahren nach einem der vorherigen Ansprüche,
**dadurch gekennzeichnet, dass**
zwischen der wenigstens einen polymerhaltigen Grundierungsschicht (15) und der Trägerlage (10, 10') wenigstens eine Funktionsschicht (14) angeordnet ist, wobei vorzugsweise das wenigstens eine Dekorelement in der wenigstens einen Funktionsschicht (14) angeordnet ist.

13. Verfahren nach Anspruch 12,
**dadurch gekennzeichnet, dass**
die zwischen der wenigstens einen polymerhaltigen Grundierungsschicht (15) und der Trägerlage (10, 10') angeordnete wenigstens eine Funktionsschicht (14) wenigstens ein Metall und/oder Halbmetall, Legierungen davon oder Mischung davon, vorzugsweise Aluminium, Eisen, Chrom, Indium, Kupfer, Zinn, Zink, Silizium, Legierungen davon oder Mischungen davon, wenigstens ein Polymer, vorzugsweise ausgewählt aus Cellulosebasierten Polymeren, chlorierten Polyolefinen, Chlorkautschuken, Kolophoniumharzen, Epoxidharzen, EVA-Copolymeren, Formaldehydharzen, Kohlenwasserstoffharzen, Keton-/Aldehydharzen, Maleinatharzen, Melaminharzen, Phenolharzen, Polyacrylaten, Polyacrylatdispersionen, Polyesterdispersionen, Polyurethandispersionen, Polyetherdispersionen, Polyamidharzen, Polyesterharzen, Polyisocyanaten, Polyolefinharzen, Polystyrolharzen, Polyurethanharzen, Polyvinylacetalen, Polyvinylacetaten, Polyvinylalkoholen, Polyvinylbutyralen, Polyvinylchloriden, Polyvinylpropionaten, Polyvinylpyrrolidonen, Polyvinylidenchloriden, Polyvinylidenfluoriden, Schelllacken, Silikonharzen, Styrol-Acrylat-Dispersionen, Sulfonamidharzen, Harnstoffharzen, Acrylnitril-1,3-Butadien-Styrol (ABS)-Harze und Mischungen davon, umfasst oder daraus besteht,
und/oder
dass die zwischen der wenigstens einen polymerhaltigen Grundierungsschicht (15) und der Trägerlage (10, 10') angeordnete wenigstens eine Funktionsschicht (14) weiterhin wenigstens ein Additiv, das vorzugsweise aus der Gruppe ausgewählt wird, die aus Hydrophobierungsmitteln, Verlaufsadditiven, Entschäumern, Farbmitteln, vorzugsweise ausgewählt aus Farbstoffen, organischen Pigmenten, anorganischen Pigmenten und Mischungen davon, Füllstoffe, Rheologie-Additiven, Weichmachern, Stabilisatoren, Lichtschutzmittel, Antioxidantien, Flammschutzmittel, Verstärkungsstoffen und Mischungen davon besteht, umfasst,
und/oder
dass die zwischen der wenigstens einen polymerhaltigen Grundierungsschicht (15) und der Trägerlage (10, 10') angeordnete wenigstens eine Funktionsschicht (14) aus der Gruppe, die aus transparenten und/oder farbigen Lackschichten, insbesondere umfassend ein oder mehrere Farbstoffe und/oder Pigmente, Replizierschichten mit abgeformter optisch aktiver Oberflächenstruktur, Reflexionsschichten, insbesondere opaken Reflexionsschichten, transparenten Reflexionsschichten, metallischen Reflexionsschichten oder dielektrischen Reflexionsschichten, optisch variablen Schichten, optisch aktiven Schichten, Interferenz-Mehrschichtsystemen, Volumenhologrammschichten, Flüssigkristallschichten, insbesondere cholesterischen Flüssigkristallschichten, elektrisch leitfähigen Schichten, Antennenschichten, Elektrodenschichten, magnetische Schichten, Magnetspeicherschichten, Barriereschichten und Kombinationen davon besteht, ausgewählt wird.

14. Verfahren nach einem der vorherigen Ansprüche,
**dadurch gekennzeichnet, dass**
an der der Trägerlage (10, 10)` abgewandten Seite der wenigstens einen polymerhaltigen Grundierungsschicht (15) eine Schutzlage (18) angeordnet ist.

15. Dekorierter, mineralischer Verbundkörper (2) hergestellt nach einem Verfahren der Ansprüche 1 bis 14,
**dadurch gekennzeichnet, dass**
der dekorierte, mineralische Verbundkörper (2) ein mineralisches Substrat (S) und wenigstens eine, an wenigstens einer Oberfläche des Substrates (S) zumindest teilweise angeordnete Übertragungslage (13, 13'), die wenigstens ein Dekorelement enthält, umfasst,
wobei die dem Substrat (S) zugewandte Seite der Übertragungslage (13, 13') durch wenigstens eine polymerhaltige Grundierungsschicht (15) gebildet ist, die mit dem Substrat (S) zumindest formschlüssig verbunden ist.

16. Dekorierter, mineralischer Verbundkörper (2) nach Anspruch 15,
**dadurch gekennzeichnet, dass**
das mineralische Substrat (S) wenigstens einen, zumindest teilweise erhärteten mineralischen Baustoff, der aus der Gruppe, die aus Beton, Mörtel, Kalksandstein, Keramik und Kombinationen davon besteht, ausgewählt wird, umfasst.

17. Dekorierter, mineralischer Verbundkörper (2) nach einem der Ansprüche 15 oder 16,
**dadurch gekennzeichnet, dass**
auf der wenigstens einen Übertragungslage (13, 13') wenigstens eine Trägerlage (10, 10') angeordnet ist,
wobei die wenigstens eine Übertragungslage (13, 13') und die wenigstens eine Trägerlage (10, 10') eine Mehrschichtfolie (1, 1') bilden, die vorzugsweise als Laminierfolie ausgebildet ist,
wobei insbesondere die Mehrschichtfolie (1, 1') zumindest an einer Kante des dekorierten, mineralischen Verbundkörpers (2) einen Überstand ausbildet.

18. Verwendung einer Mehrschichtfolie (1, 1') zur Herstellung eines dekorierten, mineralischen Verbundkörpers (2),
**dadurch gekennzeichnet, dass**
die Mehrschichtfolie (1, 1') eine Trägerlage (10, 10') und eine auf der Trägerlage (10, 10') angeordnete Übertragungslage (13, 13'), die wenigstens ein Dekorelement enthält, aufweist,
wobei die Übertragungslage (13, 13') an der der Trägerlage (10, 10') abgewandten Seite wenigstens eine polymerhaltige Grundierungsschicht (15) aufweist,
wobei die wenigstens eine polymerhaltige Grundierungsschicht (15) wenigstens ein Polymer umfasst, das wenigstens eine dissoziationsfähige, funktionelle Gruppe aufweist,
und wobei die wenigstens eine dissoziationsfähige, funktionelle Gruppe jeweils unabhängig voneinander eine Amino-Gruppe und/oder eine Hydroxy-Gruppe und/oder eine freie Säure-Gruppe, und/oder eine verkappte Säure-Gruppe, und/oder eine Kombination davon ist.

## Claims

1. Method for producing a decorated, mineral composite body (2) using at least one multilayer film (1, 1'), the method comprising the following steps:
a) providing at least one mould element (30), preferably shuttering, having at least one outer surface and at least one inner surface (31),
b) applying a flowable or plastically deformable, mineral building material mixture comprising water and at least one mineral binder to the at least one inner surface (31) of the mould element (30), preferably shuttering,
c) at least partially setting the mineral building material mixture so as to obtain a dimensionally-stable, mineral green body (3a), and
d) at least partially hardening the mineral building material mixture,
**characterised in that**
the multilayer film (1, 1') has a carrier layer (10, 10') and a transfer layer (13, 13') which is disposed on the carrier layer (10, 10') and contains at least one decorative element, wherein the transfer layer (13, 13') has at least one polymer-containing primer layer (15) on the side of facing away from the carrier layer (10, 10'), and
wherein I) the at least one multilayer film (1, 1') is disposed before step b) with the side of the carrier layer (10, 10') facing away from the at least one polymer-containing primer layer (15) on the at least one inner surface (31) of the provided mould element (30), preferably shuttering, and in step b) the at least one polymer-containing primer layer (15) is brought into contact at least in part with the flowable or plastically deformable, mineral building material mixture, whereby a decorated, dimensionally-stable, mineral green body (3) is obtained in step c),
and/or
wherein II) the at least one multilayer film (1, 1') is disposed in and/or after step c) with the at least one polymer-containing primer layer (15) at least partially on the dimensionally-stable, mineral green body (3a), whereby a decorated, dimensionally-stable, mineral green body (3) is obtained, and
wherein, in the case of alternatives I) and II), a decorated, mineral composite body (2) is obtained after step d),
wherein the at least one polymer-containing primer layer (15) comprises at least one polymer that has at least one functional group capable of dissociation,
and wherein the at least one functional group capable of dissociation is in each case, independently of one another, an amino group and/or a hydroxyl group and/or a free acid group, and/or a blocked acid group, and/or a combination thereof.

2. Method according to claim 1,
**characterised in that**
the at least one mineral binder comprises a hydraulic binder, a non-hydraulic binder or a mixture thereof,
and/or
**in that** the at least one mineral binder is selected from the group consisting of calcium silicate hydrates, cement, lime, clay, gypsum, loam, magnesia binder and combinations thereof.

3. Method according to one of the preceding claims,
**characterised in that**
the mineral building material mixture comprises or consists of concrete, mortar, sand-lime brick, silicate ceramics or a combination thereof.

4. Method according to one of claims 1 to 3,
**characterised in that**
the mineral building material mixture comprises or consists of concrete or mortar, wherein the at least one mineral binder comprises or consists of cement, and wherein the mineral building material mixture further comprises aggregate.

5. Method according to one of claims 1 to 3,
**characterised in that**
the mineral building material mixture comprises or consists of sand-lime brick or aerated concrete, wherein the at least one mineral binder comprises or consists of a calcium silicate hydrate,
wherein in step d), the decorated, dimensionally-stable, mineral green body (3) is hydrothermally cured, preferably at a temperature from a range of from 100°C to 300°C in the presence of steam to obtain a decorated, mineral composite body (2).

6. Method according to one of claims 1 to 3,
**characterised in that**
the mineral building material mixture comprises or consists of a silicate ceramic, preferably porcelain, wherein the at least one mineral binder comprises or consists of a clay mineral, preferably kaolinite,
wherein a dimensionally-stable, mineral green body (3) is obtained in step c) by means of pressing, slip casting, injection moulding, tape casting, modelling and/or extrusion, and
wherein in step d), the decorated, dimensionally-stable, mineral green body (3) is calcined, preferably at a temperature of 850°C or more for a period of at least 12 hours, so as to obtain a decorated, mineral composite body (2),
wherein in particular the at least one multilayer film (1) comprises at least one refractory decorative element, preferably comprising one or more refractory pigments and/or one or more moulded surface reliefs.

7. Method according to one of the preceding claims,
**characterised in that**
the carrier layer (10, 10') comprises at least one support layer (11) made of a polyester, a polyolefin or a combination thereof, in particular PET,
and/or
**in that** the at least one support layer (11) of the carrier layer (10, 10') has a thickness between 4 µm and 100 µm, preferably between 10 µm and 50 µm.

8. Method according to one of the preceding claims,
**characterised in that**
the carrier layer (10, 10') further comprises at least one release layer (12) disposed on the side of the carrier layer (10, 10') facing the transfer layer (13, 13'),
wherein in particular the at least one release layer (12) comprises at least one wax, preferably montan ester wax, at least one silicone, at least one polyurethane or a combination thereof.

9. Method according to one of the preceding claims,
**characterised in that**
the one free acid group is selected from the group consisting of carboxyl group, sulphonic acid group, sulphuric acid monoester group, phosphonic acid group, phosphoric acid monoester group and combinations thereof, preferably carboxyl group, sulphonic acid group and combinations thereof, more preferably carboxyl group, and/or the one blocked acid group is selected from the group consisting of carboxylic acid ester group, carboxylic acid anhydride group, carboxylic acid halide, sulphonic acid ester group, sulfonic acid anhydride group, sulphonic acid halide group, phosphonic acid ester group and combinations thereof, more preferably carboxylic acid ester group, carboxylic acid anhydride group, sulphonic acid ester group and combinations thereof, more preferably carboxylic acid ester group, carboxylic acid anhydride group and combinations thereof, more preferably carboxylic acid ester group, sulphonic acid ester group and combinations thereof, more preferably carboxylic acid ester group,
and/or
**in that** the at least one polymer-containing primer layer (15) comprises or consists of at least one polymer having at least one free acid group selected from the group consisting of carboxyl group, sulphonic acid group, phosphonic acid group and combinations thereof, and/or at least one polymer having at least one blocked acid group selected from the group consisting of carboxylic acid ester group, carboxylic acid anhydride group, sulphonic acid ester group, sulphonic acid anhydride group and combinations thereof,
and/or
**in that** the at least one polymer-containing primer layer (15) comprises or consists of at least one polymer having at least one free acid group selected from the group consisting of epoxide polymers and copolymers each having at least one free acid group, acrylic polymers and copolymers each having at least one free acid group, methacrylic polymers and copolymers each having at least one free acid group, polyurethane polymers and copolymers each having at least one free acid group and mixtures thereof, preferably acrylic polymers each having at least one free acid group, methacrylic polymers each having at least one free acid group, polyurethane polymers each having at least one free acid group, copolymers thereof and mixtures thereof, and/or at least one polymer having at least one blocked acid group selected from the group consisting of epoxide polymers and copolymers each having at least one blocked acid group, acrylic polymers and copolymers each having at least one blocked acid group, methacrylic polymers and copolymers each having at least one blocked acid group, polyurethane polymers and copolymers each having at least one blocked acid group, styrene polymers and copolymers each having at least one blocked acid group and mixtures thereof.

10. Method according to one of the preceding claims,
**characterised in that**
the at least one polymer-containing primer layer (15) has a non-volatile content of 5 wt% to 50 wt%, preferably 10 wt% to 20 wt%, in each case based on the total weight of all constituents of the primer layer (15),
and/or
**in that** the at least one polymer-containing primer layer (15) has a residual moisture content of at most 15 wt%, based in each case on the total weight of all constituents of the primer layer (15),
and/or
**in that** the at least one polymer-containing primer layer (15) has a thickness of 50 nm to 1000 µm.

11. Method according to one of the preceding claims,
**characterised in that**
the at least one decorative element influences the surface texture, the colour of the surface, the mechanical properties and/or the chemical properties of the decorated, mineral composite body (2), wherein the at least one decorative element is preferably formed as a motif, as an embellishment, for example single image embellishment or continuous embellishment, as a pattern, or a combination thereof.

12. Method according to one of the preceding claims,
**characterised in that**
at least one functional layer (14) is disposed between the at least one polymer-containing primer layer (15) and the carrier layer (10, 10'), wherein the at least one decorative element is preferably disposed in the at least one functional layer (14).

13. Method according to claim 12,
**characterised in that**
the at least one functional layer (14) disposed between the at least one polymer-containing primer layer (15) and the carrier layer (10, 10') comprises or consists of at least one metal and/or semi-metal, alloys thereof or a mixture thereof, preferably aluminium, iron, chromium, indium, copper, tin, zinc, silicon, alloys thereof or mixtures thereof, at least one polymer, preferably selected from cellulose-based polymers, chlorinated polyolefins, chlorinated rubber, rosins, epoxy resins, EVA copolymers, formaldehydes, hydrocarbon resins, ketone/aldehyde resins, maleic resins, melamine resins, phenolic resins, polyacrylates, polyacrylate dispersions, polyester dispersions, polyurethane dispersions, polyether dispersions, polyamide resins, polyester resins, polyisocyanates, polyolefin resins, polystyrene resins, polyurethane resins, polyvinyl acetals, polyvinyl acetates, polyvinyl alcohols, polyvinyl butyrals, polyvinyl chlorides, polyvinyl propionates, polyvinyl pyrrolidones, polyvinylidene chlorides, polyvinylidene fluorides, shellacs, silicone resins, styrene-acrylate dispersions, sulphonamide resins, urea resins, acrylonitrile-1,3-butadiene-styrene (ABS) resins and mixtures thereof,
and/or
**in that** the at least one functional layer (14) disposed between the at least one polymer-containing primer layer (15) and the carrier layer (10, 10') further comprises at least one additive preferably selected from the group consisting of water repellents, flow additives, defoamers, colorants, preferably selected from dyes, organic pigments, inorganic pigments and mixtures thereof, fillers, rheology additives, plasticisers, stabilisers, light protectants, antioxidants, flame retardants, reinforcing agents and mixtures thereof,
and/or
**in that** the at least one functional layer (14) disposed between the at least one polymer-containing primer layer (15) and the carrier layer (10, 10') is selected from the group consisting of transparent and/or coloured lacquer layers, in particular comprising one or more dyes and/or pigments, replicating layers with moulded optically active surface structure, reflecting layers, in particular opaque reflecting layers, transparent reflecting layers, metallic reflecting layers or dielectric reflecting layers, optically variable layers, optically active layers, interference multilayer systems, volume hologram layers, liquid crystal layers, in particular cholesteric liquid crystal layers, electrically conductive layers, antenna layers, electrode layers, magnetic layers, magnetic storage layers, barrier layers and combinations thereof.

14. Method according to one of the preceding claims,
**characterised in that**
a protective layer (18) is disposed on that side of the at least one polymer-containing primer layer (15) facing away from the carrier layer (10, 10').

15. Decorated, mineral composite body (2) produced by a method according to claims 1 to 14,
**characterised in that**
the decorated, mineral composite body (2) comprises a mineral substrate (S) and at least one transfer layer (13, 13') which is at least partly disposed on at least one surface of the substrate (S) and contains at least one decorative element,
wherein that side of the transfer layer (13, 13') facing the substrate (S) is formed by at least one polymer-containing primer layer (15) which is at least form-fittingly connected to the substrate (S).

16. Decorated, mineral composite body (2) according to claim 15,
**characterised in that**
the mineral substrate (S) comprises at least one, at least partially hardened mineral building material selected from the group consisting of concrete, mortar, sand-lime brick, ceramic and combinations thereof.

17. Decorated, mineral composite body (2) according to one of claims 15 or 16, **characterised in that**
at least one carrier layer (10, 10') is disposed on the at least one transfer layer (13, 13'),
wherein the at least one transfer layer (13, 13') and the at least one carrier layer (10, 10') form a multilayer film (1, 1') which is preferably formed as a laminated film,
wherein in particular the multilayer film (1, 1') forms an overhang on at least one edge of the decorated, mineral composite body (2).

18. Use of a multilayer film (1, 1') for producing a decorated, mineral composite body (2),
**characterised in that**
the multilayer film (1, 1') has a carrier layer (10, 10') and a transfer layer (13, 13') disposed on the carrier layer (10, 10') and containing at least one decorative element,
wherein the transfer layer (13, 13') has at least one polymer-containing primer layer (15) on the side facing away from the carrier layer (10, 10'),
wherein the at least one polymer-containing primer layer (15) comprises at least one polymer which has at least one functional group capable of dissociation,
and wherein the at least one functional group capable of dissociation is in each case, independently of one another, an amino group and/or a hydroxyl group and/or a free acid group, and/or a blocked acid group, and/or a combination thereof.

## Revendications

1. Procédé de fabrication d'un corps composite (2) minéral décoré en utilisant au moins un film multicouche (1, 1'), dans lequel le procédé comprend les étapes suivantes :
a) la fourniture d'au moins un élément moulé (30), de préférence d'un coffrage, avec au moins une surface extérieure et au moins une surface intérieure (31),
b) l'application d'un mélange minéral de matières de construction pouvant couler ou plastiquement déformable, qui comprend de l'eau et au moins un liant minéral, sur l'au moins une surface intérieure (31) de l'élément moulé (30), de préférence du coffrage,
c) la solidification au moins partielle du mélange minéral de matières de construction en obtenant un corps vert (3a) minéral à forme stable, et
d) le durcissement au moins partiel du mélange minéral de matières de construction,
**caractérisé en ce que**
le film multicouche (1, 1'), présente une strate de support (10, 10') et une strate de transfert (13, 13'), disposée sur la strate de support (10, 10'), qui contient au moins un élément décoratif,
dans lequel la strate de transfert (13, 13') présente sur le côté opposé à la strate de support (10, 10') au moins une couche d'apprêt (15) contenant un polymère, et
dans lequel I) l'au moins un film multicouche (1, 1') est disposé, avant l'étape b), sur l'au moins une surface intérieure (31) de l'élément moulé (30) fourni, de préférence du coffrage, avec le côté, opposé à l'au moins une couche d'apprêt (15) contenant un polymère, de la strate de support (10, 10') et lors de l'étape b) l'au moins une couche d'apprêt (15) contenant un polymère est amenée en contact au moins en partie avec le mélange minéral de matières de construction pouvant couler ou plastiquement déformable, dans lequel lors de l'étape c), un corps vert (3) minéral décoré à forme stable est obtenu,
et/ou
dans lequel II) l'au moins un film multicouche (1, 1') est disposé au moins en partie sur le corps vert (3a) minéral à forme stable avec l'au moins une couche d'apprêt (15) contenant un polymère lors et/ou après l'étape c),
dans lequel un corps vert (3) minéral décoré à forme stable est obtenu, et
dans lequel lors de l'alternative I) et II), un corps composite (2) minéral décoré est obtenu après l'étape d),
dans lequel l'au moins une couche d'apprêt (15) contenant un polymère comprend au moins un polymère, qui présente au moins un groupe fonctionnel susceptible de dissocier,
et dans lequel l'au moins un groupe fonctionnel susceptible de se dissocier est respectivement, indépendamment les uns des autres, un groupe amino et/ou un groupe hydroxy et/ou un groupe non acide, et/ou un groupe acide protégé et/ou une combinaison de ceux-ci.

2. Procédé selon la revendication 1,
**caractérisé en ce que**
l'au moins un liant minéral comprend un liant hydraulique, un liant non hydraulique ou un mélange de ceux-ci,
et/ou
que l'au moins un liant minéral est choisi parmi le groupe qui est constitué de silicates de calcium hydratés, de ciment, de chaux, d'argile, de plâtre, de limon, de magnésie et de combinaisons de ceux-ci.

3. Procédé selon l'une quelconque des revendications précédentes,
**caractérisé en ce que**
le mélange minéral de matières de construction comprend du béton, du mortier, de la brique silico-calcaire, de la céramique silicatée ou une combinaison de ceux-ci ou en est constitué.

4. Procédé selon l'une quelconque des revendications 1 à 3,
**caractérisé en ce que**
le mélange minéral de matières de construction comprend du béton ou du mortier ou en est constitué, dans lequel l'au moins un liant minéral comprend du ciment ou en est constitué, et dans lequel le mélange minéral de matières de construction comprend par ailleurs des granulats.

5. Procédé selon l'une quelconque des revendications 1 à 3,
**caractérisé en ce que**
le mélange minéral de matières de construction comprend de la brique silico-calcaire ou du béton poreux ou en est constitué, dans lequel l'au moins un liant minéral comprend un silicate de calcium hydraté ou en est constitué,
dans lequel lors de l'étape d), le corps vert (3) minéral décoré à forme stable est durci de manière hydrothermique, de préférence à une température issue d'une plage de 100 °C à 300 °C en présence de vapeur d'eau en obtenant un corps composite (2) minéral décoré.

6. Procédé selon l'une quelconque des revendications 1 à 3,
**caractérisé en ce que**
le mélange minéral de matières de construction comprend une céramique silicatée, de préférence de la porcelaine ou en est constitué, dans lequel l'au moins un liant minéral comprend un minéral argileux, de préférence de la kaolinite ou en est constitué,
dans lequel lors de l'étape c), un corps vert (3a) minéral à forme stable est obtenu au moyen d'un pressage, d'une coulée en barbotine, d'une coulée par injection, d'une coulée de films, d'un modelage et/ou d'une extrusion, et
dans lequel lors de l'étape d), le corps vert (3) minéral décoré à forme stable est cuit, de préférence à une température de 850 °C ou plus pendant une durée d'au moins 12 h, en obtenant un corps composite (2) minéral décoré,
dans lequel en particulier l'au moins un film multicouche (1) comprend au moins un élément décoratif réfractaire, de préférence comprenant un ou plusieurs pigments réfractaires et/ou un ou plusieurs reliefs en surface démoulés.

7. Procédé selon l'une quelconque des revendications précédentes,
**caractérisé en ce que**
la strate de support (10, 10') comprend au moins une couche de support (11) composée d'un polyester, d'une polyoléfine ou d'une combinaison de ceux-ci, en particulier de PET,
et/ou
que l'au moins une couche de support (11) de la strate de support (10, 10') présente une épaisseur de couche entre 4 µm et 100 µm, de manière préférée entre 10 µm et 50 µm.

8. Procédé selon l'une quelconque des revendications précédentes,
**caractérisé en ce que**
la strate de support (10, 10') comprend par ailleurs au moins une couche décollable (12), qui est disposée sur le côté, tourné vers la strate de transfert (13, 13'), de la strate de support (10, 10'),
dans lequel en particulier l'au moins une couche décollable (12) comprend au moins une cire, de préférence une cire d'ester montanique, au moins un silicone, au moins un polyuréthane ou une combinaison de ceux-ci.

9. Procédé selon l'une quelconque des revendications précédentes,
**caractérisé en ce que**
le groupe non acide est choisi parmi le groupe, qui est constitué du groupe carboxy, groupe d'acide sulfonique, groupe de monoester d'acide sulfurique, groupe d'acide phosphonique, groupe de monoester d'acide phosphorique et de combinaisons de ceux-ci, de préférence groupe carboxy, groupe d'acide sulfonique et de combinaisons de ceux-ci, de manière davantage préférée de groupe carboxy, et/ou le groupe acide protégé est choisi parmi le groupe, qui est constitué du groupe d'ester d'acide carboxylique, groupe d'anhydride d'acide carboxylique, groupe d'halogénure d'acide carboxylique, groupe d'ester d'acide sulfonique, groupes d'anhydride d'acide sulfonique, groupe d'halogénure d'acide sulfonique, groupe d'ester d'acide phosphonique et de combinaisons de ceux-ci, de manière davantage préférée groupe d'ester d'acide carboxylique, groupe d'anhydride d'acide carboxylique, groupe d'ester d'acide sulfonique et de combinaisons de ceux-ci, de manière davantage préférée groupe d'ester d'acide carboxylique, groupe d'anhydride d'acide carboxylique et de combinaisons de ceux-ci, de manière davantage préférée groupe d'ester d'acide carboxylique, groupe d'ester d'acide sulfonique et de combinaisons de ceux-ci, de manière davantage préférée groupe d'ester d'acide carboxylique,
et/ou
que l'au moins une couche d'apprêt (15) contenant un polymère comprend au moins un polymère avec au moins un groupe non acide, qui est choisi parmi le groupe, qui est constitué de groupe carboxy, de groupe d'acide sulfonique, de groupe d'acide phosphonique et de combinaisons de ceux-ci, et/ou au moins un polymère avec au moins un groupe acide protégé, qui est choisi parmi le groupe, qui est constitué de groupe d'ester d'acide carboxylique, groupe d'anhydride d'acide carboxylique, groupe d'ester d'acide sulfonique, groupe d'anhydride d'acide sulfonique et de combinaisons de ceux-ci, ou en est constitué,
et/ou
que l'au moins une couche d'apprêt (15) contenant un polymère comprend au moins un polymère avec au moins un groupe non acide, qui est choisi parmi le groupe, qui est constitué de polymères et de copolymères d'époxyde respectivement avec au moins un groupe non acide, de polymères et de copolymères acryliques avec respectivement au moins un groupe non acide, de polymères et de copolymères méthacryliques avec respectivement au moins un groupe non acide, de polymères et de copolymères de polyuréthane avec respectivement au moins un groupe non acide et de mélanges de ceux-ci, de préférence de polymères acryliques avec respectivement au moins un groupe non acide, de polymères méthacryliques avec respectivement au moins un groupe non acide, de polymères de polyuréthane avec respectivement au moins un groupe non acide, de copolymères de ceux-ci et de mélanges de ceux-ci, et/ou au moins un polymère avec au moins un groupe acide protégé, qui est choisi parmi le groupe, qui est constitué de polymères et de copolymères d'époxyde avec respectivement au moins un groupe acide protégé, de polymères et de copolymères acryliques avec respectivement au moins un groupe acide protégé, de polymères et de copolymères méthacryliques avec respectivement au moins un groupe acide protégé, de polymères et de copolymères de polyuréthane avec respectivement au moins un groupe acide protégé, de polymères et de copolymères de styrène avec respectivement au moins un groupe acide protégé et de mélanges de ceux-ci, ou en est constituée.

10. Procédé selon l'une quelconque des revendications précédentes,
**caractérisé en ce que**
l'au moins une couche d'apprêt (15) contenant un polymère présente une fraction non volatile de 5 % en poids à 50 % en poids, de préférence de 10 % en poids à 20 % en poids, respectivement par rapport au poids total de tous les constituants de la couche d'apprêt (15),
et/ou
que l'au moins une couche d'apprêt (15) contenant un polymère présente une fraction d'humidité résiduelle de 15 % en poids au maximum respectivement par rapport au poids total de tous les constituants de la couche d'apprêt (15),
et/ou
que l'au moins une couche d'apprêt (15) contenant un polymère présente une épaisseur de 50 nm à 1000 µm.

11. Procédé selon l'une quelconque des revendications précédentes,
**caractérisé en ce que**
l'au moins un élément décoratif influence la texture en surface, la couleur de la surface, les propriétés mécaniques et/ou les propriétés chimiques du corps composite (2) minéral décoré, dans lequel l'au moins un élément décoratif est réalisé de préférence en tant que motif, en tant qu'élément décoratif, par exemple en tant qu'élément décoratif à image unique ou en tant qu'élément décoratif sans fin, en tant que schéma ou qu'une combinaison de ceux-ci.

12. Procédé selon l'une quelconque des revendications précédentes,
**caractérisé en ce que**
au moins une couche fonctionnelle (14) est disposée entre l'au moins une couche d'apprêt (15) contenant un polymère et la strate de support (10, 10'), dans lequel de préférence l'au moins un élément décoratif est disposé dans l'au moins une couche fonctionnelle (14).

13. Procédé selon la revendication 12,
**caractérisé en ce que**
l'au moins une couche fonctionnelle (14) disposée entre l'au moins une couche d'apprêt (15) contenant un polymère et la strate de support (10, 10') comprend au moins un métal et/ou un semi-métal, des alliages de ceux-ci ou un mélange de ceux-ci, de préférence de l'aluminium, du fer, du chrome, de l'indium, du cuivre, de l'étain, du zinc, du silicium, des alliages de ceux-ci ou des mélanges de ceux-ci, au moins un polymère, de préférence choisi parmi des polymères à base de cellulose, des polyoléfines chlorées, des caoutchoucs chlorés, des résines de colophane, des résines époxy, des copolymères d'EVA, des résines de formaldéhyde, des résines hydrocarbonées, des résines de cétone/d'aldéhyde, des résines maléiques, des résines de mélamine, des résines phénoliques, des polyacrylates, des dispersions de polyacrylate, des dispersions de polyester, des dispersions de polyuréthane, des dispersions de polyéther, des résines de polyamide, des résines de polyester, des polyisocyanates, des résines de polyoléfine, des résines de polystyrène, des résines de polyuréthane, des polyacétals de vinyle, des polyacétates de vinyle, des alcools polyvinyliques, des polyvinylbutyrals, des chlorures de polyvinyle, des proprionates de polyvinyle, des pyrrolidones de polyvinyle, des chlorures de polyvinylidène, des fluorures de polyvinylidène, des gommes-laques, des résines siliconées, des dispersions styrène-acrylate, des résines de sulfonamide, des résines d'urée, des résines ABS [acrylonitrile 1,3-butadiène styrène], ou en est constituée,
et/ou
que l'au moins une couche fonctionnelle (14) disposée entre l'au moins une couche d'apprêt (15) contenant un polymère et la strate de support (10, 10') comprend par ailleurs au moins un additif, qui est choisi de préférence parmi le groupe, qui est constitué d'agents d'hydrophobisation, d'additifs nivelants, d'agents anti-mousse, de colorants, de préférence choisis parmi des substances colorantes, des pigments organiques, des pigments inorganiques et des mélanges de ceux-ci, de charges, d'additifs rhéologiques, de plastifiants, d'agents stabilisants, d'agents de protection contre la lumière, d'anti-oxydants, de retardateurs de flammes, d'agents de renforcement et de mélanges de ceux-ci,
et/ou
que l'au moins une couche fonctionnelle (14) disposée entre l'au moins une couche d'apprêt (15) contenant un polymère et la strate de support (10, 10') est choisie parmi le groupe, qui est constitué de couches de vernis transparentes et/ou de couleur, en particulier comprenant une ou plusieurs substances colorantes et/ou des pigments, de couches de réplication avec une structure en surface active optiquement déformée, de couches réfléchissantes, en particulier de couches réfléchissantes opaques, de couches réfléchissantes transparentes, de couches réfléchissantes métalliques ou de couches réfléchissantes diélectriques, de couches optiquement variables, de couches optiquement actives, de systèmes multicouches d'interférence, de couches holographiques en volume, de couches à cristaux liquides, en particulier de couches à cristaux liquides cholestériques, de couches électriquement conductrices, de couches d'antenne, de couches d'électrodes, de couches magnétiques, de couches à mémoire magnétique, de couches de barrière et de combinaisons de ceux-ci.

14. Procédé selon l'une quelconque des revendications précédentes,
**caractérisé en ce que**
une strate de protection (18) est disposée sur le côté, opposé à la strate de support (10, 10'), de l'au moins une couche d'apprêt (15) contenant un polymère.

15. Corps composite (2) minéral décoré fabriqué selon un procédé selon l'une quelconque des revendications 1 à 14,
**caractérisé en ce que**
le corps composite (2) minéral décoré comprend un substrat minéral (S) et au moins une strate de transfert (13, 13') disposée au moins en partie sur au moins une surface du substrat (S), qui contient au moins un élément décoratif,
dans lequel le côté, tourné vers le substrat (S), de la strate de transfert (13, 13') est formé par au moins une couche d'apprêt (15) contenant un polymère, qui est reliée au moins par complémentarité de forme au substrat (S).

16. Corps composite (2) minéral décoré selon la revendication 15,
**caractérisé en ce que**
le substrat (S) minéral comprend au moins une matière de construction minérale durcie au moins en partie, laquelle est choisie parmi le groupe, qui est constitué de béton, de mortier, de brique silico-calcaire, de céramique et de combinaisons de ceux-ci.

17. Corps composite (2) minéral décoré selon l'une quelconque des revendications 15 ou 16,
**caractérisé en ce que**
au moins une strate de support (10, 10') est disposée sur l' au moins une strate de transfert (13, 13'),
dans lequel l'au moins une strate de transfert (13, 13') et l'au moins une strate de support (10, 10') forment un film multicouche (1, 1'), qui est réalisé de préférence en tant que film stratifié,
dans lequel en particulier le film multicouche (1, 1') réalise un débord au moins sur une arête du corps composite (2) minéral décoré.

18. Utilisation d'un film multicouche (1, 1') pour fabriquer un corps composite (2) minéral décoré,
**caractérisée en ce que**
le film multicouche (1, 1') présente une strate de support (10, 10') et une strate de transfert (13, 13') disposée sur la strate de support (10, 10'), qui contient au moins un élément décoratif,
dans laquelle la strate de transfert (13, 13') présente sur le côté opposé à la strate de support (10, 10') au moins une couche d'apprêt (15) contenant un polymère,
dans lequel l'au moins une couche d'apprêt (15) contenant un polymère comprend au moins un polymère, qui présente au moins un groupe fonctionnel susceptible de se dissocier,
et dans lequel l'au moins un groupe fonctionnel susceptible de se dissocier est respectivement indépendamment les uns des autres un groupe amino et/ou un groupe hydroxy et/ou un groupe sans acide et/ou un groupe acide protégé et/ou une combinaison de ceux-ci.
